# EUROPÄISCHE PATENTANMELDUNG

(11) **EP 4 744 963 A1**
(43) Veröffentlichungstag der Anmeldung: **20.05.2026**
(21) Anmeldenummer: 24213622.4
(22) Anmeldetag: 18.11.2024
(51) Int. Cl.: B60P 7/08

(54) **LADEGUTSICHERUNG, SPANN- UND/ODER WICKELVORRICHTUNG UND VERFAHREN ZUM SPANNEN UND/ODER AUFWICKELN**

(71) Anmelder: EPSILON Kran GmbH., 5020 Salzburg (AT); Palfinger AG, 5101 Bergheim bei Salzburg (AT)
(72) Erfinder: MESSNER, Gabriel, 5020 Salzburg (AT); HÖLLER, Philipp, 5020 Salzburg (AT); HETZ, Johannes, 5020 Salzburg (AT)
(74) Vertreter: Torggler & Hofmann Patentanwälte - Innsbruck

(57) **Zusammenfassung**

Ladegutsicherung (1) zum Spannen und/oder Wickeln eines Zugmittels (2) auf einer Wickelrolle (3), wobei die Ladegutsicherung (1)
- eine Antriebswelle (4) mit einer Antriebsachse (5) und mit zumindest einem Exzenter (6) umfasst, wobei die Antriebswelle (4) rotatorisch antreibbar ist, und
- eine Abtriebswelle (7) mit einer von der Antriebsachse (5) verschiedenen und vorzugsweise zur Antriebsachse (5) parallelen Abtriebsachse (8) umfasst, wobei die Abtriebswelle (7) rotatorisch antreibbar und mit der Wickelrolle (3) zum Rotieren der Wickelrolle (3) direkt oder indirekt verbindbar ist, und
- wenigstens eine Ratsche (9) mit einem Außenring (10) umfasst, wobei die wenigstens eine Ratsche (9) mit der Abtriebswelle (7) zum Rotieren der Abtriebswelle (7) in eine Abtriebsrotationsrichtung (11) bewegungsgekoppelt ist,
wobei der Außenring (10) unabhängig von einer Antriebsrotationsrichtung (12) der Antriebswelle (4) durch den wenigstens einen Exzenter (6) rotierend um die Abtriebsachse (8) mitnehmbar ist.

## Beschreibung

Die vorliegende Erfindung betrifft eine Ladegutsicherung zum Spannen und/oder Wickeln eines Zugmittels auf einer Wickelrolle, wobei die Ladegutsicherung
- eine Antriebswelle mit einer Antriebsachse und mit zumindest einem Exzenter umfasst, wobei die Antriebswelle rotatorisch antreibbar ist, und
- eine Abtriebswelle mit einer von der Antriebsachse verschiedenen und vorzugsweise zur Antriebsachse im Wesentlichen parallelen Abtriebsachse umfasst, wobei die Abtriebswelle rotatorisch antreibbar und mit der Wickelrolle zum Rotieren der Wickelrolle direkt oder indirekt verbindbar ist, und
- wenigstens eine Ratsche mit wenigstens einem Außenring umfasst, wobei die wenigstens eine Ratsche mit der Abtriebswelle zum Rotieren der Abtriebswelle in eine Abtriebsrotationsrichtung bewegungsgekoppelt ist.

Des Weiteren betrifft die Erfindung eine Spann- und/oder Wickelvorrichtung mit einer solchen Ladegutsicherung und ein Verfahren zum Spannen und/oder Aufwickeln des Zugmittels.

Derartige Ladegutsicherungen können beispielsweise zum Spannen eines Gurts, einer Kette, eines Seils oder dergleichen zur Sicherung eines Ladeguts, wie z.B. zur Sicherung von Holzstämmen, verwendet werden. Beim Entladen des Ladeguts kann eine derartige Ladegutsicherung das Zugmittel gegebenenfalls aufwickeln.

Im Allgemeinen sind solche Ladegutsicherungen aus dem Stand der Technik bekannt, wobei die in der DE 202021101558 U1 und in der BR 102018072808 A2 gezeigten Ladegutsicherungen Beispiele zweier bekannter Arten sind. Die DE 202021101558 U1 zeigt eine Seilwinde für ein unbemanntes Luftfahrzeug, wobei ein Planetengetriebe zum Einsatz kommt. Planetengetriebe sind aufgrund ihrer komplexen Bauweise aufwändig und dadurch nachteiligerweise teuer in der Fertigung. Die BR 102018072808 A2 zeigt eine Spannvorrichtung mit einem pneumatischen Linearantrieb, welcher eine Abtriebswelle mittels einer Ratsche vorschiebt. Neben den allgemeinen Nachteilen pneumatischer Antriebe, wie z.B. der unangenehmen Lautstärke im Betrieb, der höheren Betriebskosten, dem großen Wartungsaufwand und der niedrigen Energieeffizienz, bringt die Vorrichtung der BR 102018072808 A2 nachteiligerweise auch einen großen Platzbedarf mit sich.

Die Aufgabe der vorliegenden Erfindung ist es daher, eine zum Stand der Technik verbesserte Ladegutsicherung zum Spannen und/oder Wickeln eines Zugmittels bereitzustellen, insbesondere wobei die Ladegutsicherung kompakt und effizient ausgebildet ist und sowohl in ihrer Fertigung als auch im Betrieb mit einem geringen Kostenaufwand verbunden ist.

Diese Aufgabe wird durch die Merkmale des Anspruchs 1 gelöst, nämlich durch eine Ladegutsicherung der eingangs genannten Art, bei welcher der Außenring unabhängig von einer Antriebsrotationsrichtung der Antriebswelle durch den wenigstens einen Exzenter rotierend um die Abtriebsachse mitnehmbar ist.

Ein erster großer Vorteil der Erfindung besteht darin, dass sich damit auf kleinem Raum sehr hohe Übersetzungen realisieren lassen.

Dadurch bietet die Erfindung beispielsweise die Möglichkeit, einen Elektromotor als Rotationsantrieb zu verwenden, da eine hohe Übersetzung vorteilhafterweise mit geringen Drehmomentanforderungen an den Elektromotor einhergeht.

Indem die Ladegutsicherung sehr kompakt ausgebildet werden kann, weist sie vorteilhafterweise ein relativ geringes Gewicht auf und nimmt, z.B. bei einem Einsatz montiert an einer Runge eines Holztransporters, äußerst wenig Bauraum ein.

Des Weiteren bringt die Ladegutsicherung die Vorteile eines rein mechanischen Systems zur Kraftübertragung mit sich, ohne dafür ein zu komplexes und zu teures System, wie z.B. ein Planetengetriebe, zu erfordern.

Die Ladegutsicherung hat also durch einen einfachen und effizienten, mechanischen Aufbau den Vorteil, in der Herstellung und im Betrieb, insbesondere durch eine unkomplizierte Wartung, kostengünstig zu sein.

Die Abtriebsrotationsrichtung der Abtriebswelle ist dabei jene Richtung, durch welche ein an der Wickelrolle befestigtes Zugmittel, wie z.B. ein Gurt, auf die Wickelrolle aufgewickelt wird oder durch die Wickelrolle gespannt wird.

Die Abtriebsrotationsrichtung ist beim Spannen und/oder Aufwickeln immer dieselbe Rotationsrichtung.

Die Antriebsrotationsrichtung kann ident oder entgegengesetzt zur Abtriebsrotationsrichtung sein und insbesondere durch eine Drehrichtung des, insbesondere elektrischen, Rotationsantriebs bewirkt werden.

Zum Abwickeln des Zugmittels bewegen sich die Wickelrolle und insbesondere die Abtriebswelle in eine zur Abtriebsrotationsrichtung entgegengesetzte Richtung.

Die Ladegutsicherung funktioniert im Wesentlichen so, dass die Antriebswelle um ihre Antriebsachse, d.h. Rotationsachse der Antriebswelle, rotiert wird, wobei der wenigstens eine Exzenter den Außenring der wenigstens einen Ratsche, insbesondere stückweise, in die Abtriebsrotationsrichtung rotiert, wobei ein Ratschenfreilauf die Bewegung der Antriebswelle auf die Abtriebswelle überträgt, sodass die Ratsche die Abtriebswelle antreibt oder rotiert.

Dieses Antreiben der Abtriebswelle durch die wenigstens eine Ratsche kann als Ratschenantrieb bezeichnet werden.

Der Ratschenfreilauf befindet sich also zwischen dem Außenring der Ratsche und der Abtriebswelle, wobei er die Rotation des Außenrings in Abtriebsrotationsrichtung an die Abtriebswelle überträgt.

Eine Rotation des Außenrings entgegengesetzt zur Abtriebsrotationsrichtung lässt der Ratschenfreilauf zu, sodass sich der Außenring rückstellen kann, um wiederum, insbesondere iterativ, durch den wenigstens einen Exzenter um die Abtriebsachse, d.h. Rotationsachse der Abtriebswelle, mitgenommen zu werden.

Der Ratschenfreilauf, wie z.B. ein Klemmkörperfreilauf, dient insbesondere auch dazu, ein ungewünschtes Abwickeln des Zugmittels durch eine ungewünschte Rotation der Abtriebswelle entgegengesetzt zur Abtriebsrotationsrichtung zu verhindern.

Die Antriebswelle ist insbesondere dazu ausgebildet, von einem, insbesondere elektrischen, Rotationsantrieb, z.B. Elektromotor, angetrieben zu werden.

Weitere vorteilhafte Ausführungsformen der Erfindung werden in den abhängigen Ansprüchen definiert.

Es kann vorgesehen sein, dass der Außenring mit dem wenigstens einen Exzenter mittels eines Pleuels bewegungsgekoppelt ist.

Es ist bevorzugt vorgesehen, dass der Außenring mit dem wenigstens einen Exzenter unverbunden ist und/oder dass der Außenring unabhängig von dem wenigstens einen Exzenter in die Abtriebsrotationsrichtung bewegbar ist.

Es ist besonders bevorzugt vorgesehen, dass der Außenring der Ratsche ein Ratschenhebel mit wenigstens einem Fortsatz ist, wobei der wenigstens eine Fortsatz durch den wenigstens einen Exzenter mitnehmbar ist.

Es kann vorgesehen sein, dass der Außenring, vorzugsweise mittels des Fortsatzes, nur in die Abtriebsrotationsrichtung mitnehmbar ist.

In bevorzugten Ausführungsbeispielen ist zwischen dem wenigstens einen Exzenter und dem Außenring, insbesondere dem Fortsatz, der wenigstens einen Ratsche ein Exzenterlager, vorzugsweise ein Wälzlager, z.B. ein Kugellager, eine Laufrolle, eine Stützrolle oder dergleichen, angeordnet. Ein derartiges Exzenterlager ermöglicht eine besonders reibungsarme Kraftübertragung und/oder erlaubt auch eine punktuelle Kraftübertragung.

Es ist besonders bevorzugt vorgesehen, dass die Ladegutsicherung wenigstens eine Rückstellvorrichtung aufweist, welche dazu ausgebildet ist, den Außenring, insbesondere den Ratschenhebel, entgegengesetzt zur Abtriebsrotationsrichtung zu bewegen oder rückzustellen.

Die wenigstens eine Rückstellvorrichtung umfasst vorzugsweise eine Feder, insbesondere Druckfeder, welche den Außenring der Ratsche rückstellt, wobei die Feder vorzugsweise zwischen einem Abstützelement der Ladegutsicherung und einem Vorsprung der Ratsche, insbesondere des Außenrings der Ratsche, gespannt ist.

Die wenigstens eine Rückstellvorrichtung kann auch einen, insbesondere mit dem wenigstens einen Exzenter unverbundenen, Rückholarm umfassen, welcher durch den wenigstens einen Exzenter entgegengesetzt zur Abtriebsrotationsrichtung mitnehmbar ist.

In bevorzugten Ausführungsbeispielen weist die Ladegutsicherung ein Tragelement auf, welches insbesondere zur Lagerung der Abtriebswelle dient, vorzugsweise wobei zwischen der Abtriebswelle und dem Tragelement ein Abtriebsfreilauf angeordnet ist.

Das Tragelement ist vorzugsweise dazu ausgebildet, ein ungewolltes Entspannen des Zugmittels zu verhindern, nachdem der wenigstens eine Exzenter seinen oberen Totpunkt erreicht hat. Der obere Totpunkt ist insbesondere jene Position des wenigstens einen Exzenters, in welcher er die maximal mögliche Auslenkung des Außenrings, insbesondere des Ratschenhebels, um die Abtriebsachse bewirkt.

Vorzugsweise ist die Abtriebswelle durch wenigstens ein, insbesondere zwei an den beiden Enden der Abtriebswelle angeordnete, Flanschlager gelagert.

Das wenigstens eine Flanschlager ist vorzugsweise dazu ausgebildet, die Abtriebswelle radial und axial in einem Gehäuse zu führen.

Besonders bevorzugt ist die Antriebswelle durch eine Öffnung des Tragelements durchgeführt und/oder am Tragelement gelagert.

Es kann vorgesehen sein, dass der Vorsprung zum Abstützen der Feder, insbesondere als Teil der Rückstellvorrichtung, am Tragelement angeordnet ist.

Es ist besonders bevorzugt vorgesehen, dass die Ladegutsicherung zumindest zwei Ratschen und die

Antriebswelle zumindest zwei Exzenter aufweist, wobei jeder Außenring, insbesondere jeder Fortsatz, jeder Ratsche durch je einen Exzenter mitnehmbar ist.

Insbesondere sind die wenigstens zwei Exzenter an der Antriebswelle um einen Drehwinkel relativ zur Antriebsachse und entlang der Antriebsachse zueinander versetzt angeordnet, sodass die Außenringe der wenigstens zwei Ratschen abwechselnd durch die wenigstens zwei Exzenter mitgenommen werden und die Abtriebswelle abwechselnd antreiben. Mit mehreren Ratschen kann die Abtriebswelle vorteilhafterweise rascher und durchgängiger angetrieben werden, wodurch ein effektiveres Spannen und/oder Aufwickeln des Zugmittels möglich ist.

In bevorzugten Ausführungsbeispielen weist die Ladegutsicherung zumindest ein Getriebe zur Übertragung der Bewegung der Antriebswelle auf die Abtriebswelle auf, wobei das Getriebe dazu ausgebildet ist, die Abtriebswelle schneller, d.h. mit einer höheren Drehzahl, anzutreiben als die wenigstens eine Ratsche die Abtriebswelle antreibt.

Dabei überholt ein Getriebeabtrieb des zumindest einen Getriebes den Ratschenantrieb, wobei der Ratschenantrieb aber weiterhin aktiv ist.

D.h. insbesondere, dass die Abtriebswelle durch das zumindest eine Getriebe anstatt durch die wenigstens eine Ratsche angetrieben wird, wenn das zumindest eine Getriebe aktiv ist.

Wird die Abtriebswelle durch das wenigstens eine Getriebe angetrieben, kann das Zugmittel aufgrund der höheren Drehzahl rasch aufgewickelt werden.

Wird die Abtriebswelle durch die wenigstens eine Ratsche angetrieben, kann das Zugmittel gespannt werden. Dies erfolgt langsamer als wenn die Abtriebswelle durch das wenigstens eine Getriebe angetrieben wird.

Das Antreiben der Abtriebswelle durch die wenigstens eine Ratsche kann als erster Gang bezeichnet werden.

Das Antreiben der Abtriebswelle durch das wenigstens eine Getriebe kann als, insbesondere optionaler, zweiter Gang bezeichnet werden.

Insbesondere weist der durch das wenigstens eine Getriebe bewirkte zweite Gang zu jedem Zeitpunkt eine höhere Drehzahl auf als der durch die wenigstens eine Ratsche bewirkte erste Gang.

Es ist besonders bevorzugt vorgesehen, dass das zumindest eine Getriebe dazu ausgebildet ist, dass es bei einer Rotation der Antriebswelle in eine erste Antriebsrotationsrichtung inaktiv ist. D.h. insbesondere, dass das Getriebe dann keine Bewegung auf die Abtriebswelle überträgt.

Es ist besonders bevorzugt vorgesehen, dass das zumindest eine Getriebe dazu ausgebildet ist, dass es bei einer Rotation der Antriebswelle in eine zweite Antriebsrotationsrichtung, welche der ersten Antriebsrotationsrichtung entgegengesetzt ist, aktiv ist, wobei das zumindest eine Getriebe die Abtriebswelle in Abtriebsrotationsrichtung bewegt.

D.h. insbesondere, dass das wenigstens eine Getriebe aktivierbar ist, indem die Antriebswelle in die zweite Antriebsrotationsrichtung rotiert wird, und dass bei einer Rotation der Antriebswelle in die erste Antriebsrotationsrichtung ausschließlich die wenigstens eine Ratsche angetrieben wird.

D.h., dass die Abtriebswelle im ersten Gang durch die wenigstens eine Ratsche angetrieben wird, wenn die Antriebswelle in die erste Antriebsrotationsrichtung rotiert wird. Rotiert die Antriebswelle in die zweite Antriebsrotationsrichtung, dann ist das wenigstens eine Getriebe aktiv, überholt den Ratschenantrieb und treibt die Abtriebswelle im zweiten Gang an. Vorteilhafterweise kann die Ladegutsicherung dann sowohl zum Spannen des Zugmittels, z.B. zum Sichern eines Ladeguts während eines Transports, als auch zum Aufwickeln des Zugmittels, z.B. beim Entladen des Ladeguts, verwendet werden.

Es kann vorgesehen sein, dass die Ladegutsicherung dazu ausgebildet ist, die Abtriebswelle automatisch und/oder selbständig anzutreiben, insbesondere um das Zugmittel nachzuspannen. Somit kann z.B. vor und/oder während eines Ladungstransports eine ausreichende Zugmittelkraft gewährleistet und die Ladung sicher transportiert werden.

Es ist bevorzugt vorgesehen, dass das zumindest eine Getriebe ein, vorzugsweise formschlüssiges, Zugmittelgetriebe ist, welches ein mit der Antriebswelle verbundenes Antriebsrad und ein mit der Abtriebswelle verbundenes Abtriebsrad aufweist, wobei das Antriebsrad und das Abtriebsrad mit einem Zugmittel bewegungsgekoppelt sind.

Vorzugsweise weist das Getriebe eine Übersetzung von zwischen 0,6 und 2,0 auf.

Das Zugmittelgetriebe kann ein Kettengetriebe mit einer Kette als Zugmittel oder ein Riemengetriebe mit einem Riemen, z.B. Keilriemen oder Zahnriemen, als Zugmittel sein.

Das Antriebsrad und das Abtriebsrad sind vorzugsweise Kettenblätter, wobei das Antriebsrad vorzugsweise 15-25 Zähne aufweist und/oder wobei das Abtriebsrad vorzugsweise 15-30 Zähne aufweist.

Das Zugmittelgetriebe kann gekreuzt oder offen, vorzugsweise offen, ausgebildet sein.

Es ist auch denkbar, dass das zumindest eine Getriebe ein Zahnradgetriebe, insbesondere Stirnradgetriebe, ohne oder mit zumindest einem Zwischenrad zwischen dem Antriebsrad und dem Abtriebsrad ist.

Es ist besonders bevorzugt vorgesehen, dass das Antriebsrad mittels eines Antriebsradfreilaufs mit der Antriebswelle verbunden ist, wobei der Antriebsradfreilauf das Antriebsrad in jene Rotationsrichtung mitnimmt, über welche das Abtriebsrad des zumindest einen Getriebes die Abtriebswelle in die Abtriebsrotationsrichtung rotiert.

Es kann auch sein, dass das Abtriebsrad mittels eines Abtriebsradfreilaufs mit der Abtriebswelle verbunden ist, wobei der Abtriebsradfreilauf das Abtriebsrad in die Abtriebsrotationsrichtung mitnimmt.

In besonders bevorzugten Ausführungsbeispielen umfasst die Abtriebswelle eine Sammelwelle, welche durch die wenigstens eine Ratsche und insbesondere durch das zumindest eine Getriebe antreibbar ist.

In besonders bevorzugten Ausführungsbeispielen umfasst die Abtriebswelle eine entkuppelbare Ausgangswelle, welche mit der Wickelrolle verbindbar ist.

Vorzugsweise umfasst die Ladegutsicherung eine Kupplung, welche die Ausgangswelle mit der Abtriebswelle, vorzugsweise mit der Sammelwelle, kuppelt und entkuppelt.

In besonders bevorzugten Ausführungsbeispielen umfasst die Abtriebswelle die Sammelwelle und die Ausgangswelle. D.h. insbesondere, dass die Abtriebswelle aus zwei Wellen besteht, welche zum Spannen oder Aufwickeln des Zugmittels, insbesondere Gurts, gekoppelt oder miteinander verriegelt sind.

Vorzugsweise ist die Sammelwelle als eine Hohlwelle ausgebildet, insbesondere wobei die Ausgangswelle zumindest bereichsweise innerhalb der Sammelwelle angeordnet ist.

Es ist besonders bevorzugt vorgesehen, dass die Sammelwelle und die Ausgangswelle durch die Kupplung miteinander gekuppelt oder kuppelbar sind, insbesondere wobei die Kupplung in einer Grundstellung, d.h. insbesondere in einem Spann- und/oder Wickelzustand der Ladegutsicherung, gekuppelt ist. Durch die Kupplung ist es vorteilhafterweise möglich, die Ausgangswelle auch, insbesondere manuell, entgegen die Abtriebsrotationsrichtung zu rotieren, um das Zugmittel abzuwickeln.

In der gekuppelten Stellung sind die Sammelwelle und die Ausgangswelle bewegungsgekoppelt, wobei die durch die wenigstens eine Ratsche und/oder durch das wenigstens eine Getriebe antreibbare Sammelwelle die Rotationsbewegung auf die Ausgangswelle überträgt.

Die Kupplung kann eine formschlüssige und/oder kraftschlüssige Kupplung, wie z.B. Muffenkupplung, Klauenkupplung, Lamellenkupplung oder dergleichen, sein.

Vorzugsweise ist ein Abtrieb, insbesondere das Abtriebsrad des zumindest einen Getriebes, fest mit der Sammelwelle verbunden.

In bevorzugten Ausführungsbeispielen weist die Kupplung einen die Abtriebswelle umgreifenden Kupplungsring und wenigstens einen zwischen der Abtriebswelle und dem Kupplungsring angeordneten, verschieblich gelagerten Sperrkörper auf, wobei der wenigstens eine Sperrkörper
- in einer gekuppelten Stellung der Ausgangswelle, insbesondere mit der Sammelwelle, in wenigstens eine Öffnung in der Abtriebswelle, insbesondere der Ausgangswelle und/oder der Sammelwelle, eingreift und durch den Kupplungsring in radiale Richtung zur Abtriebsachse blockiert ist, und
- in einer entkuppelten Stellung der Ausgangswelle, insbesondere mit der Sammelwelle, eingriffsfrei an der Abtriebswelle anliegt, sodass die Ausgangswelle relativ zur Abtriebswelle, vorzugsweise zur Sammelwelle, verschiebbar, insbesondere entgegen die Abtriebsrotationsrichtung rotierbar, ist.

Es ist besonders bevorzugt vorgesehen, dass der Kupplungsring einen ersten ringförmigen Bereich mit einem ersten Innendurchmesser und einen zweiten ringförmigen Bereich mit einem zweiten Innendurchmesser aufweist, wobei der zweite Innendurchmesser größer als der erste Innendurchmesser ist und wobei der zweite ringförmige Bereich zur Aufnahme des wenigstens einen Sperrkörpers ausgebildet ist.

Vorzugsweise blockiert der erste ringförmige Bereich den wenigstens einen Sperrkörper in der gekuppelten Stellung in eine radiale Richtung bezüglich der Abtriebsachse, wobei der wenigstens eine Sperrkörper in die wenigstens eine Öffnung in der Abtriebswelle, insbesondere die Ausgangswelle, eingreift.

Vorzugsweise nimmt der zweite ringförmige Bereich den wenigstens einen Sperrkörper in der entkuppelten Stellung auf, sodass der wenigstens eine Sperrkörper an der Abtriebswelle, insbesondere an der Ausgangswelle, anliegt.

In besonders bevorzugten Ausführungsbeispielen sind mehrere Sperrkörper in Form von Kugeln vorgesehen.

Besonders bevorzugt umfasst die Kupplung eine, vorzugsweise die Abtriebswelle umgebende und/oder daran abgestützte, Rückstellfeder auf, welche den Kupplungsring in die gekuppelte Stellung vorspannt, insbesondere sodass die Kupplung in einer Grundstellung, d.h. vor allem in einem Spann- und/oder Wickelzustand der Ladegutsicherung, immer gekuppelt ist.

Es ist bevorzugt vorgesehen, dass die Kupplung einen Kupplungshebel zur Betätigung der Kupplung, insbesondere zum Verschieben des Kupplungsrings zwischen der gekuppelten Stellung und der entkuppelten Stellung aufweist.

D.h. insbesondere, dass der Kupplungshebel dazu ausgebildet ist, mittels des Kupplungsrings den wenigstens einen Sperrkörper in die und aus der gekuppelten Stellung in den Öffnungen der Abtriebswelle, insbesondere der Ausgangswelle, zu bewegen.

Vorzugweise ist der Kupplungshebel zum mechanischen Einrasten ausgebildet und/oder mittels einer Feder vorgespannt, vorzugsweise wobei der Kupplungshebel in der Grundstellung eingerastet ist, sodass die Abtriebswelle und die Sammelwelle im Spann- und/oder Wickelzustand der Ladegutsicherung gekuppelt sind.

Insbesondere ist der Kupplungshebel über ein Befestigungselement mit dem Kupplungsring verbunden.

In bevorzugten Ausführungsbeispielen ist der Kupplungshebel lösbar mit dem Befestigungselement verbunden, wobei er insbesondere an einer der beiden Seiten des Befestigungselements, d.h. insbesondere an einem Ende einer am Befestigungselement angebrachten Kupplungshebelachse, montierbar ist.

Der Kupplungshebel kann auch U-förmig und/oder bügelförmig ausgebildet sein und dabei an beiden Enden der Kupplungshebelachse montiert sein.

Die Kupplung kann alternativ auch dazu ausgebildet sein, die Abtriebswelle mit und von der zumindest einen Ratsche und/oder dem zumindest einen Getriebe zu kuppeln und zu entkuppeln.

Es ist besonders bevorzugt vorgesehen, dass die Abtriebswelle, insbesondere die Ausgangswelle, an zumindest einem Ende einen Befestigungsbereich zur, insbesondere formschlüssigen, Verbindung mit der Wickelrolle aufweist.

In bevorzugten Ausführungsbeispielen weist die Abtriebswelle, insbesondere die Ausgangswelle, an beiden Enden jeweils einen Befestigungsbereich auf. So kann die Wickelrolle vorteilhafterweise beidseitig montiert werden, was wiederum bei einer Montage der Ladegutsicherung an z.B. einem Holztransporter praktisch ist.

Es ist denkbar, dass die Ladegutsicherung zumindest eine Bremse aufweist, welche zumindest zeitweise eine Bewegung der Abtriebswelle entgegengesetzt der Abtriebsrotationsrichtung hemmt, insbesondere wenn die Antriebswelle stillsteht, d.h. insbesondere wenn ein die Antriebswelle antreibender Rotationsantrieb inaktiv ist. So kann eine Ladung vorteilhafterweise dauerhaft gesichert werden.

Es ist auch denkbar, dass zusätzlich oder statt der Bremse ein selbsthemmendes Getriebe, z.B. ein Sperr- und/oder Schraubengetriebe, vorgesehen ist.

Eine Bremse ist insbesondere dann vorgesehen, wenn die Ladegutsicherung kein Getriebe aufweist, d.h. z.B., wenn es nur einen Gang aufweist.

Es ist bevorzugt vorgesehen, dass die Ladegutsicherung ein Montageelement zur Montage der Ladegutsicherung an einem weiteren System, insbesondere zur Montage an einer Runge eines Holztransporters, umfasst.

Es ist auch denkbar, dass die Ladegutsicherung einen Spann- und/oder Wickelhebel oder dergleichen aufweist, mittels welchem die Abtriebswelle manuell in die Abtriebsrotationsrichtung und/oder entgegengesetzt der Abtriebsrotationsrichtung rotierbar ist. So ist z.B. ein manuelles Spannen und/oder Aufwickeln möglich, sollte der Rotationsantrieb defekt sein. Außerdem könnte so ein manuelles Abwickeln beschleunigt werden.

Schutz wird auch begehrt für eine Spann- und/oder Wickelvorrichtung umfassend eine erfindungsgemäße Ladegutsicherung und einen, insbesondere elektrischen, Rotationsantrieb, z.B. Elektromotor, zum Antreiben der Antriebswelle.

Vorzugsweise umfasst die Spann- und/oder Wickelvorrichtung eine mit der Abtriebswelle, insbesondere der Ausgangswelle, bewegungsgekoppelte, insbesondere hohle, Wickelrolle und vorzugsweise ein an der Abtriebswelle, vorzugsweise ein an der Ausgangswelle und/oder der Wickelrolle, befestigtes Zugmittel.

In bevorzugten Ausführungsbeispielen umfasst die Spann- und/oder Wickelvorrichtung eine Überwachungseinheit zur, vorzugweise zyklischen, Überwachung eines Spannungszustands des Zugmittels. Vorteilhafterweise kann das Zugmittel so nur bei Bedarf gespannt werden, sodass die Einschalthäufigkeit des Rotationsantriebs reduziert werden kann.

In bevorzugten Ausführungsbeispielen ist die Überwachungseinheit dazu ausgebildet, den Spannungszustand durch zumindest einen Parameter des Rotationsantriebs, insbesondere im Abgleich mit einer, beispielsweise linearen, Kennlinie zwischen einer Motorstromstärke und einem Drehmoment des Rotationsantriebs, zu überwachen.

Es ist auch möglich, dass die Überwachungseinheit dazu ausgebildet ist, das Zugmittel mittels zumindest eines Signals zumindest eines Sensors, vorzugsweise Kraftsensors, zu überwachen.

Denkbar wäre auch der Einsatz eines pneumatischen oder hydraulischen Rotationsantriebs anstatt eines elektrischen Rotationsantriebs.

Die Spann- und/oder Wickelvorrichtung kann auch ein an der Wickelrolle befestigtes Zugmittel aufweisen, insbesondere welches, z.B. mittels einer Schlaufe, eines Hakens oder dergleichen an einem System, beispielsweise an einer Runge eines Holztransporters, befestigbar ist.

Eine erfindungsgemäße Ladegutsicherung kann durch ihren Einsatz mit bereits bestehenden Rotationsantrieben und/oder Wickelrollen verwendet werden, beispielweise nachträglich installiert werden.

Des Weiteren wird Schutz begehrt für ein Verfahren zum Spannen und/oder Aufwickeln eines Zugmittels mit einer erfindungsgemäßen Ladegutsicherung oder einer erfindungsgemäßen Spann- und/oder Wickelvorrichtung,
- wobei die Antriebswelle zum Spannen des Zugmittels, insbesondere mit einem, vorzugsweise elektrischen, Rotationsantrieb, in die erste Antriebsrotationsrichtung angetrieben wird, und
- vorzugsweise wobei die Antriebswelle zum Aufwickeln des Zugmittels in eine der ersten Antriebsrotationsrichtung entgegensetzte, zweite Antriebsrotationsrichtung angetrieben wird, wobei das zumindest eine Getriebe die Abtriebswelle antreibt.

Vorzugsweise ist die erste Antriebsrotationsrichtung jene Richtung, welche die Abtriebswelle mittels der wenigstens einen Ratsche in die Abtriebsrotationsrichtung antreibt, wobei das wenigstens eine Getriebe inaktiv ist. Dies entspricht dem ersten Gang, welcher langsamer ist, d.h. eine geringere Drehzahl aufweist als der zweite Gang.

Vorzugsweise ist die zweite Antriebsrotationsrichtung jene Richtung, welche die Abtriebswelle mittels des zumindest einen Getriebes in die Abtriebsrotationsrichtung antreibt, wobei die Antriebsbewegung der wenigsten einen Ratsche überholt wird. Dies entspricht dem zweiten Gang, welcher schneller ist als der erste Gang.

D.h., dass durch eine Änderung der Rotationsrichtung der Antriebswelle von der ersten Antriebsrotationsrichtung in die zweite Antriebsrotationsrichtung einen Wechsel von dem ersten, langsameren Gang zum Spannen in den zweiten, schnelleren Gang zum Aufwickeln gewechselt werden kann; und umgekehrt.

Anders ausgedrückt, erfolgt eine Gangschaltung durch Umkehr der Rotationsrichtung der Antriebswelle, falls das zumindest eine Getriebe vorhanden ist.

Bevorzugt ist es vorgesehen, dass die vom Rotationsantrieb übertragene Antriebsrotationsrichtung, und insbesondere das Umschalten von einer Richtung in die andere Richtung, durch eine Steuerung steuerbar ist, insbesondere welche durch eine Bedienperson bedient wird.

In bevorzugten Ausführungsbeispielen ist die Steuerung dazu konfiguriert, die Antriebswelle, insbesondere iterativ, anzutreiben. So kann das Zugmittel z.B. während einem Ladungstransport automatische nachgespannt werden.

Schutz wird auch begehrt für ein Verfahren zum Abwickeln des Zugmittels mit einer erfindungsgemäßen Ladegutsicherung oder einer erfindungsgemäßen Spann- und/oder Wickelvorrichtung,
- wobei optional die Kupplung, vorzugsweis durch Betätigung des Kupplungshebels, entkuppelt wird, sodass die Ausgangswelle relativ zur Sammelwelle bewegbar ist, und
- wobei die Abtriebswelle, insbesondere die Ausgangswelle, insbesondere manuell, entgegen die Abtriebsrotationsrichtung gedreht wird.

Weitere Vorteile und Einzelheiten vorteilhafter Varianten der Erfindung ergeben sich aus den Figuren sowie der dazugehörigen Figurenbeschreibung. Dabei zeigen:
- Fig. 1-2: eine erfindungsgemäße Ladegutsicherung als Teil einer Spann- und/oder Wickelvorrichtung,
- Fig. 3-15: ein erstes Ausführungsbeispiel einer erfindungsgemäßen Ladegutsicherung,
- Fig. 16-24: ein zweites Ausführungsbeispiel einer erfindungsgemäßen Ladegutsicherung,
- Fig. 25-36: ein drittes Ausführungsbeispiel einer erfindungsgemäßen Ladegutsicherung,
- Fig. 37-44: eine optionale Kupplung einer erfindungsgemäßen Ladegutsicherung,
- Fig. 45-52: das dritte Ausführungsbeispiel der erfindungsgemäßen Ladegutsicherung als Teil einer Spann- und/oder Wickelvorrichtung, und
- Fig. 53: Kennlinien des Rotationsantriebs zur Überwachung des Spannungszustands des Zugmittels.

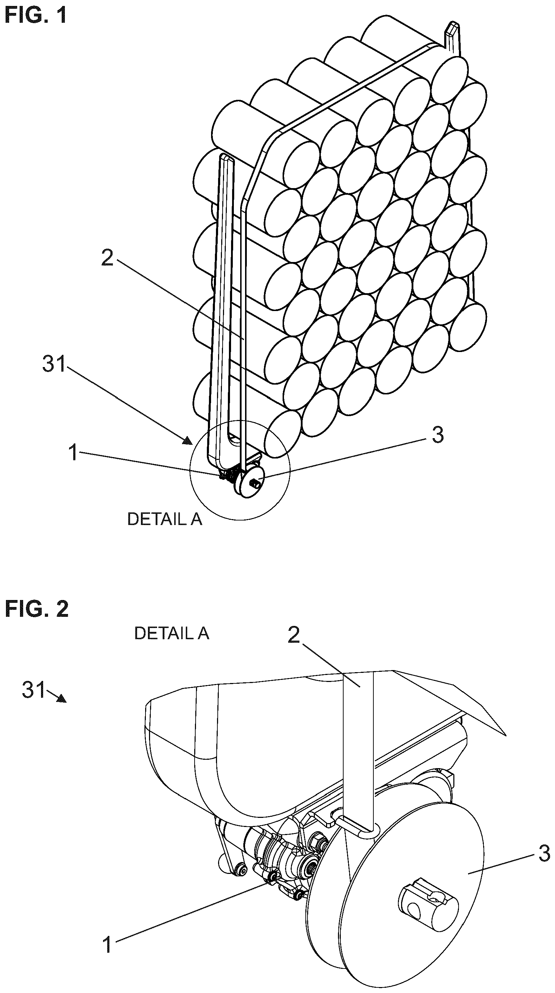

Die Fig. 1-2 zeigen eine erfindungsgemäße Ladegutsicherung 1 als Teil einer Spann- und/oder Wickelvorrichtung 31, wobei die Spann- und/oder Wickelvorrichtung 31 an einer Runge eines mit Holzstämmen beladenen Holztransporters montiert ist.

Die Spann- und/oder Wickelvorrichtung 31 umfasst neben der erfindungsgemäßen Ladegutsicherung 1 eine mit der Abtriebswelle 7 der Ladegutsicherung 1 bewegungsgekoppelte, insbesondere hohle, Wickelrolle 3 und vorzugsweise ein an der Wickelrolle 3 befestigtes Zugmittel 2.

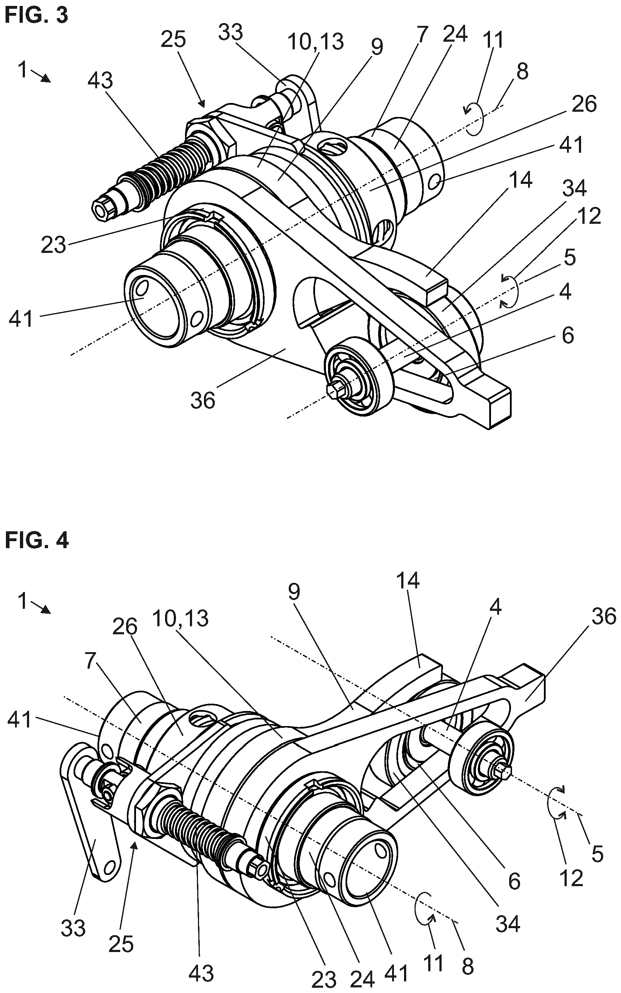

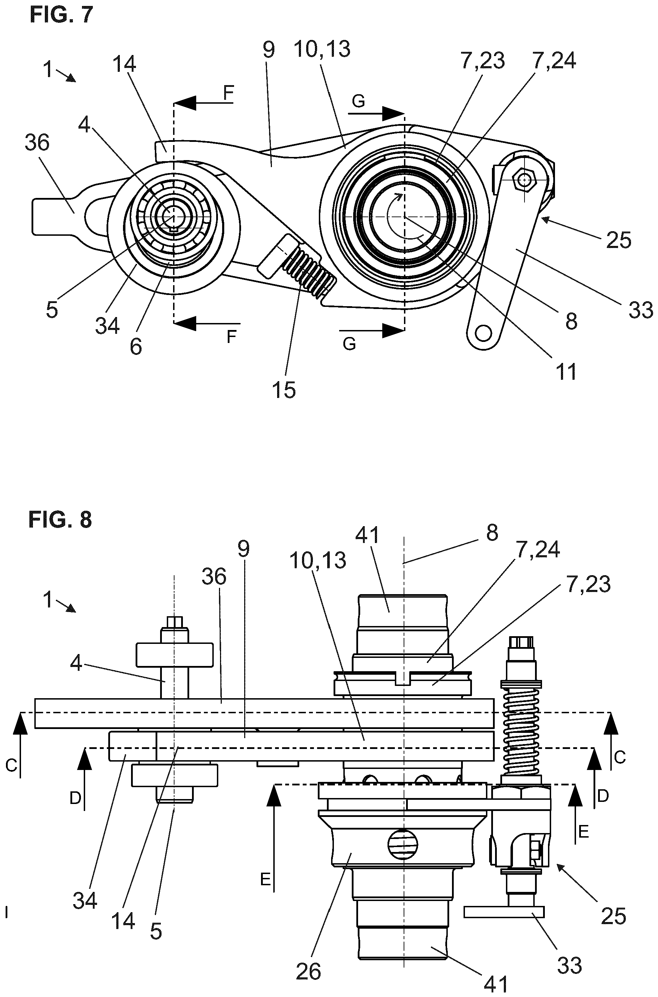

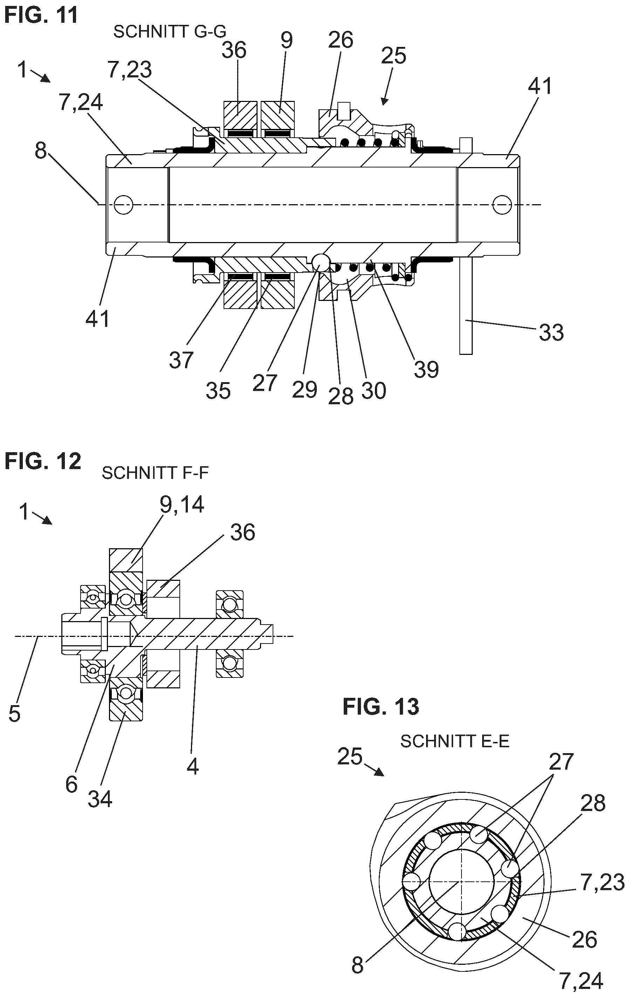

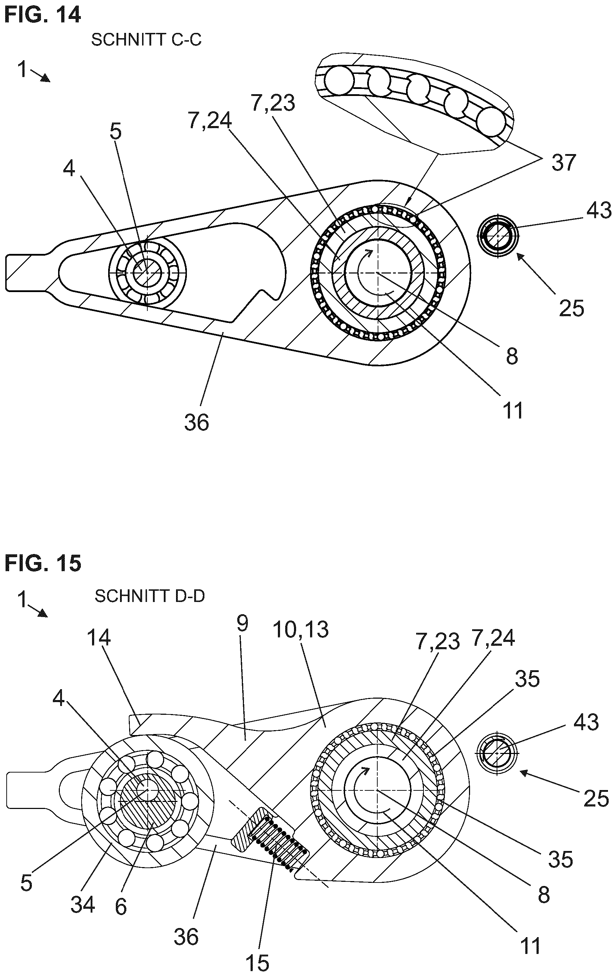

Die Fig. 3-15 zeigen Ansichten und Schnitte eines ersten Ausführungsbeispiels einer erfindungsgemäßen Ladegutsicherung 1 zum Spannen und/oder Wickeln des Zugmittels 2 auf der Wickelrolle 3, wobei die Ladegutsicherung 1
- eine Antriebswelle 4 mit einer Antriebsachse 5 und mit zumindest einem Exzenter 6 umfasst, wobei die Antriebswelle 4 rotatorisch antreibbar ist, und
- eine Abtriebswelle 7 mit einer von der Antriebsachse 5 verschiedenen Abtriebsachse 8 umfasst, wobei die Abtriebswelle 7 mit der Wickelrolle 3 zum Rotieren der Wickelrolle 3 direkt oder indirekt verbindbar ist, und
- wenigstens eine Ratsche 9 mit einem Außenring 10 umfasst, wobei die wenigstens eine Ratsche 9 mit der Abtriebswelle 7 zum Rotieren der Abtriebswelle 7 in eine

Abtriebsrotationsrichtung 11 bewegungsgekoppelt ist, und wobei der Außenring 10 unabhängig von einer Antriebsrotationsrichtung 12 der Antriebswelle 4 durch den wenigstens einen Exzenter 6 rotierend um die Abtriebsachse 8 mitnehmbar ist, und wobei der Außenring 10 nur in die Abtriebsrotationsrichtung 11 mitnehmbar ist.

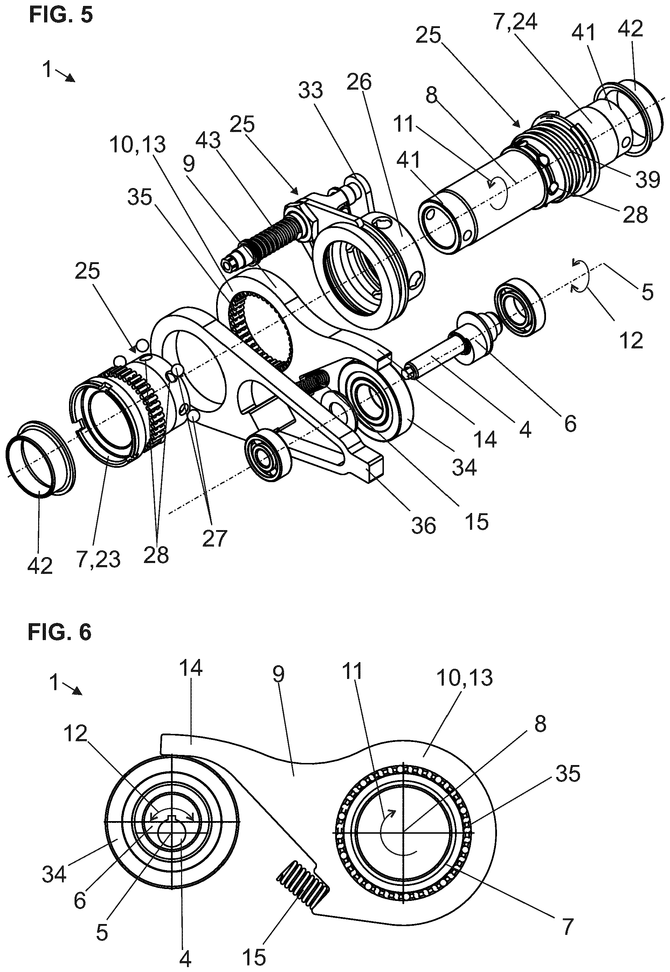

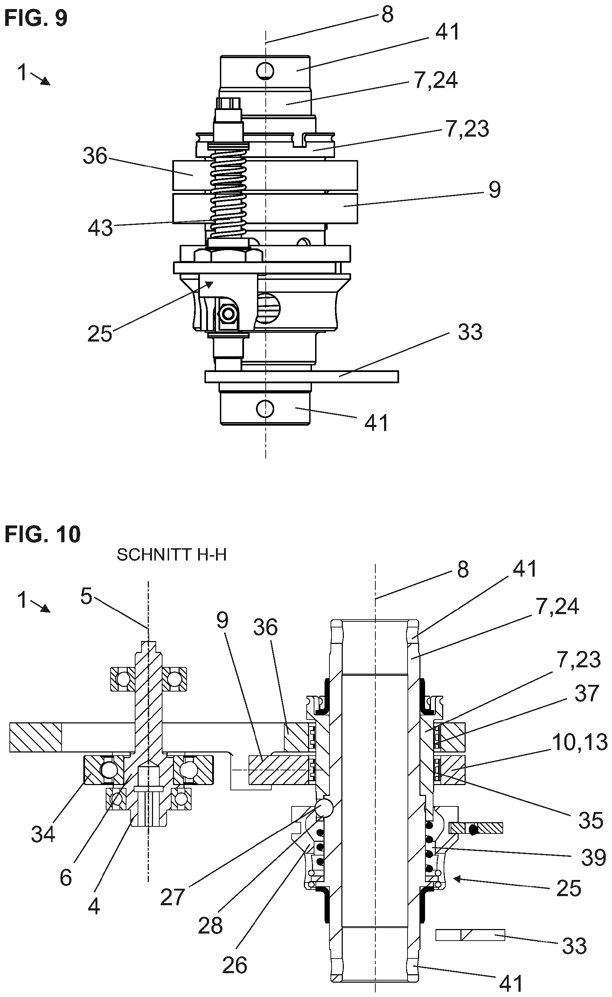

Die Fig. 3 und 4 zeigen zwei perspektivische Ansichten, die Fig. 5 eine Explosionsdarstellung, die Fig. 6-9 Seitenansichten der Ladegutsicherung 1 und die Fig. 10-15 diverse Schnitte durch die Ladegutsicherung 1. Im Folgenden sei zunächst hauptsächlich auf die in der Fig. 5 gezeigte Explosionsdarstellung verwiesen, da hier alle Komponenten dargestellt sind.

Bei diesem Ausführungsbeispiel ist der Außenring 10 der Ratsche 9 ein Ratschenhebel 13 mit wenigstens einem Fortsatz 14, wobei der wenigstens eine Fortsatz 14 durch den wenigstens einen Exzenter 6 mitnehmbar ist.

Bei diesem Ausführungsbeispiel ist am Exzenter 6 ein Exzenterlager 34, vorzugsweise eine Laufrolle oder eine Stützrolle, angeordnet, insbesondere sodass der Fortsatz 14 durch das Exzenterlager 34 mitnehmbar ist.

Bei diesem Ausführungsbeispiel weist die Ladegutsicherung 1 ein Tragelement 36 auf, welches insbesondere zur Lagerung der Abtriebswelle 7 dient, vorzugsweise wobei zwischen der Abtriebswelle 7 und dem Tragelement 36 ein Abtriebsfreilauf 37 angeordnet ist.

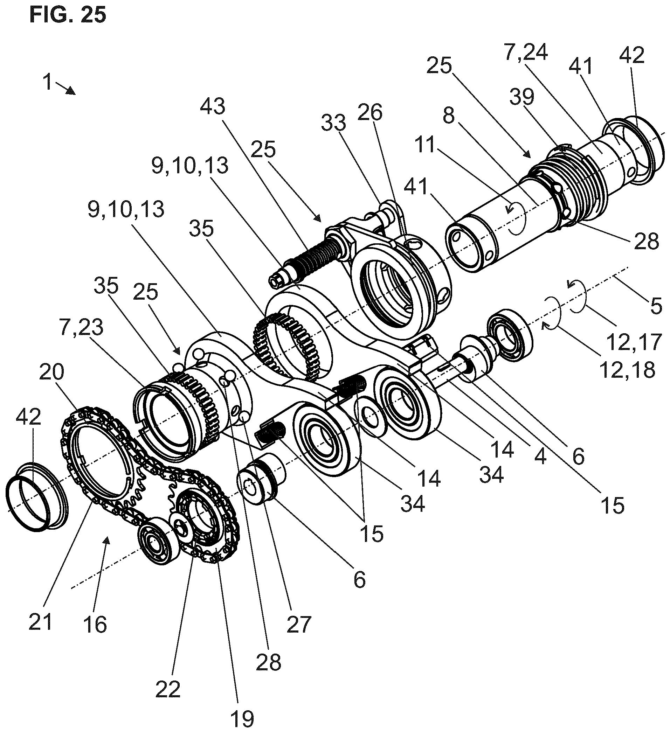

Wie in Fig. 5 (und auch in Fig. 25) zu sehen ist, ist die Abtriebswelle 7 vorzugsweise durch zwei, insbesondere an ihren beiden Enden angeordnete, Flanschlager 42 gelagert.

Dieses Ausführungsbeispiel weist wenigstens eine Rückstellvorrichtung 15 mit wenigstens einer Feder auf, wobei die Rückstellvorrichtung 15 dazu ausgebildet ist, den Außenring 10, insbesondere den Ratschenhebel 13, entgegengesetzt zur Abtriebsrotationsrichtung 11 zu bewegen.

Bei diesem Ausführungsbeispiel umfasst die Abtriebswelle 7 eine Sammelwelle 23 und eine damit gekoppelte oder koppelbare, davon getrennt ausgebildete Ausgangswelle 24, wobei die Sammelwelle 23 durch die wenigstens eine Ratsche 9 antreibbar ist und wobei die Ausgangswelle 24 mit der Wickelrolle 3 verbindbar ist, vorzugsweise wobei die Ausgangswelle 24 zumindest bereichsweise innerhalb der Sammelwelle 23 angeordnet ist.

Bei diesem Ausführungsbeispiel sind die Sammelwelle 23 und die Ausgangswelle 24 durch eine Kupplung 25 miteinander gekuppelt oder kuppelbar, insbesondere wobei die Kupplung 25 in einer Grundstellung, d.h. insbesondere in einem Spann- und/oder Wickelzustand der Ladegutsicherung 1, gekuppelt ist.

Insbesondere weist hier die Kupplung 25 einen die Abtriebswelle 7 umgreifenden Kupplungsring 26 und wenigstens einen zwischen der Abtriebswelle 7 und dem Kupplungsring 26 angeordneten, verschieblich gelagerten Sperrkörper 27 auf, wobei der wenigstens eine Sperrkörper 27
- in einer gekuppelten Stellung der Sammelwelle 23 mit der Ausgangswelle 24 in wenigstens eine Öffnung 28 in der Abtriebswelle 7, insbesondere der Ausgangswelle 24, eingreift und durch den Kupplungsring 26 in radiale Richtung zur Abtriebsachse 7 blockiert, und
- in einer entkuppelten Stellung der Sammelwelle 23 mit der Ausgangswelle 24 eingriffsfrei an der Abtriebswelle 7 anliegt, sodass die Abtriebswelle 7 relativ zur Sammelwelle 23 verschiebbar ist.

Bei diesem Ausführungsbeispiel weist die Abtriebswelle 7, insbesondere die Ausgangswelle 23, an zumindest einem Ende einen Befestigungsbereich 41 zur, insbesondere formschlüssigen, Verbindung mit der Wickelrolle 3 auf.

Bei den nun folgenden Beschreibungen der in den folgenden Figuren gezeigten Ausführungsbeispiele wird zur Vermeidung von Wiederholungen vorrangig auf die Unterschiede zum ersten Ausführungsbeispiel eingegangen. Ansonsten gilt die obige Beschreibung des ersten Ausführungsbeispiels soweit anwendbar auch für die nachfolgend noch beschriebenen Ausführungsbeispiele.

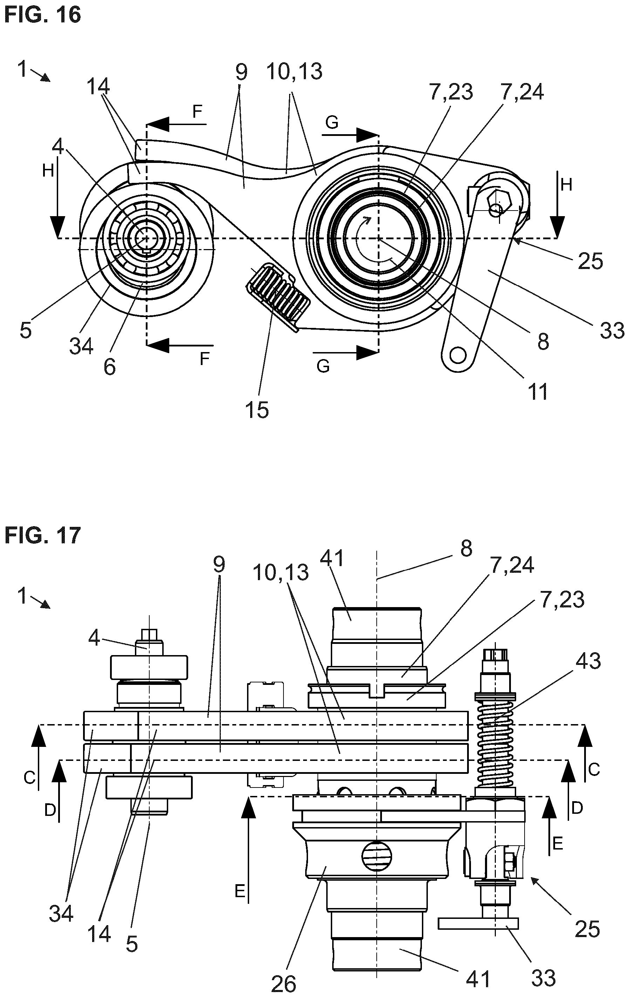

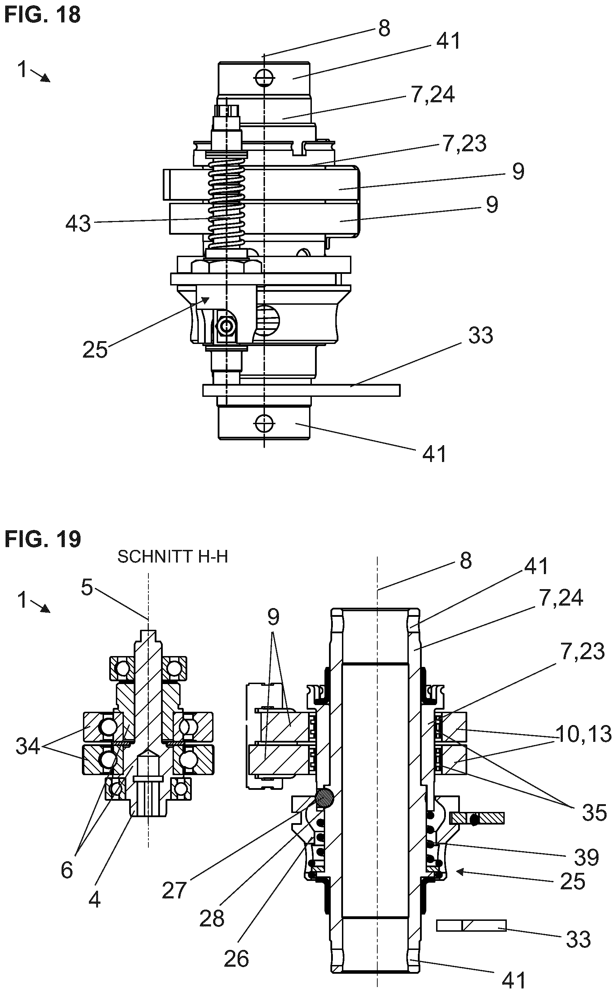

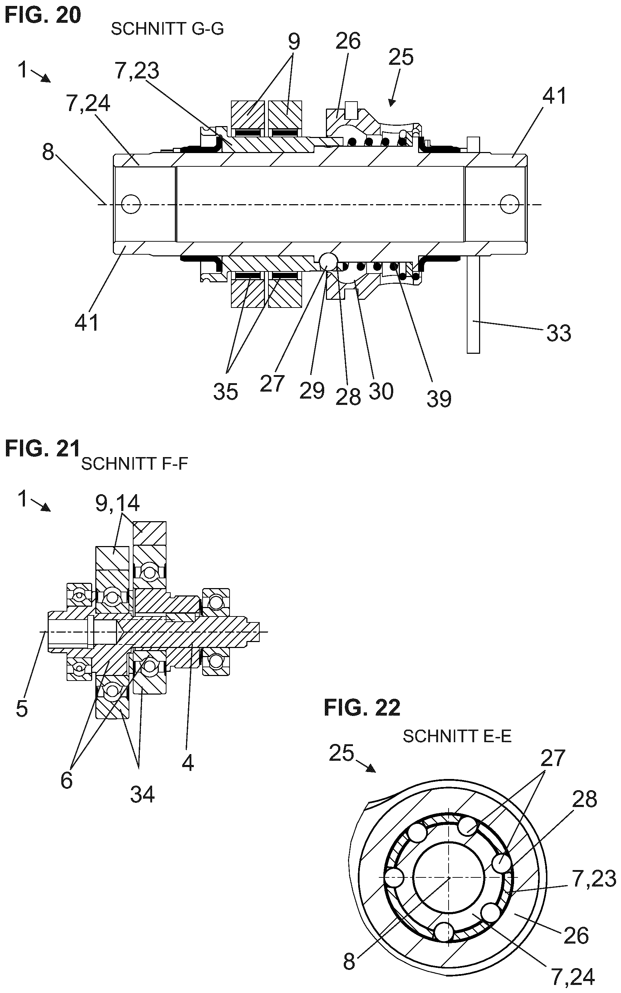

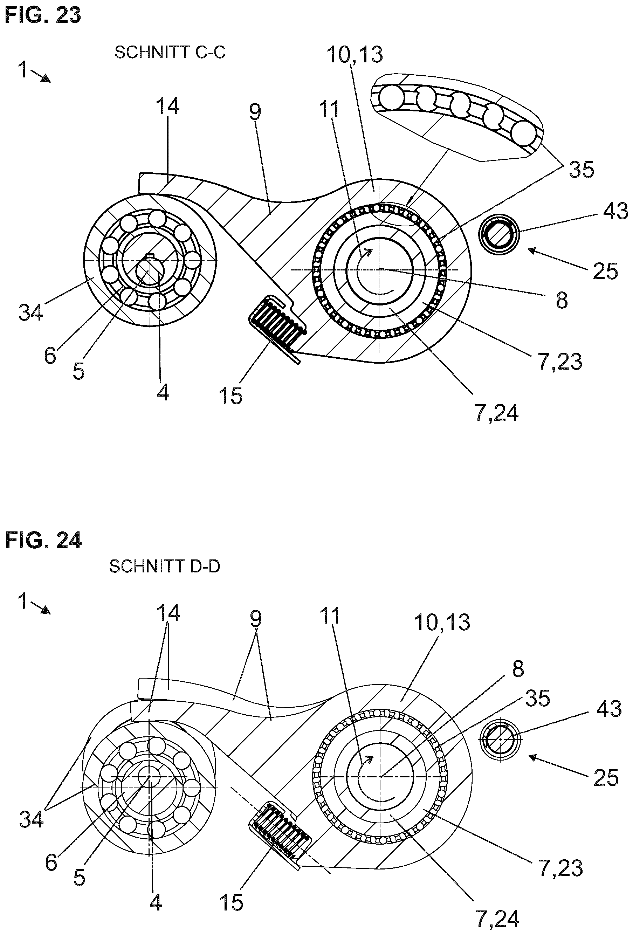

Die Fig. 16-24 zeigen ein zweites Ausführungsbeispiel einer erfindungsgemäßen Ladegutsicherung 1, wobei die Fig. 16-18 Seitenansichten und die Fig. 19-24 diverse Schnitte durch die Ladegutsicherung 1 zeigen.

Bei diesem zweiten Ausführungsbeispiel weist die Ladegutsicherung 1 zumindest zwei Ratschen 9 und die Antriebswelle 4 zumindest zwei, insbesondere um einen Drehwinkel relativ zur Antriebsachse 5 und entlang der Antriebsachse 5 zueinander versetzte, Exzenter 6 auf, wobei jeder Außenring 10 jeder Ratsche 9 durch je einen Exzenter 6 mitnehmbar ist.

Insbesondere geht aus Fig. 16 hervor, dass die Ratschenhebel 13, insbesondere die Fortsätze 14, der zumindest zwei Ratschen 9 abwechselnd durch die Exzenter 6 der Antriebswelle 4 mitgenommen werden, sodass die Abtriebswelle 7 durchgängiger angetrieben wird.

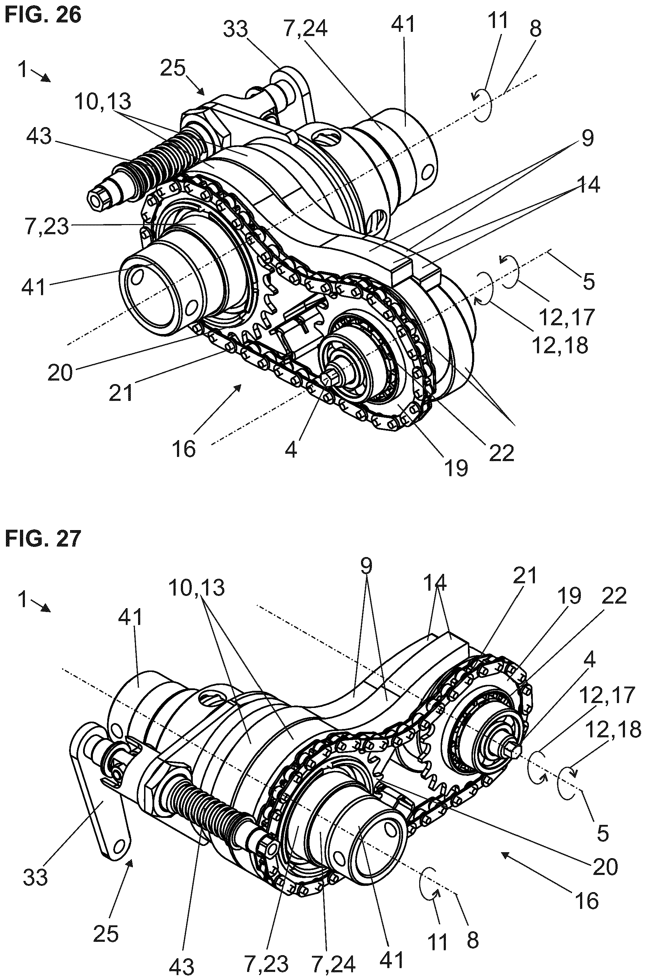

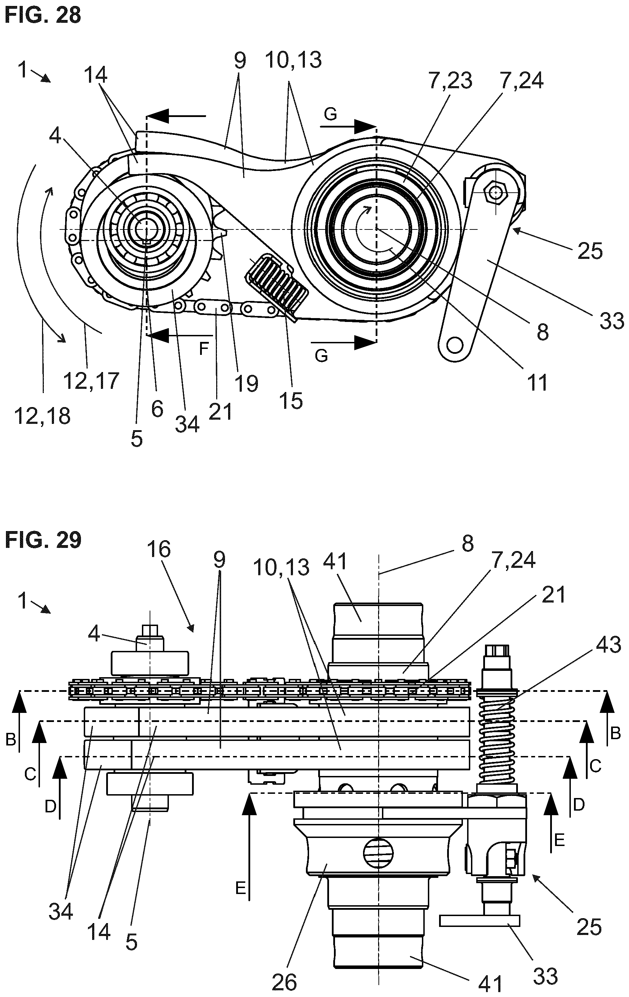

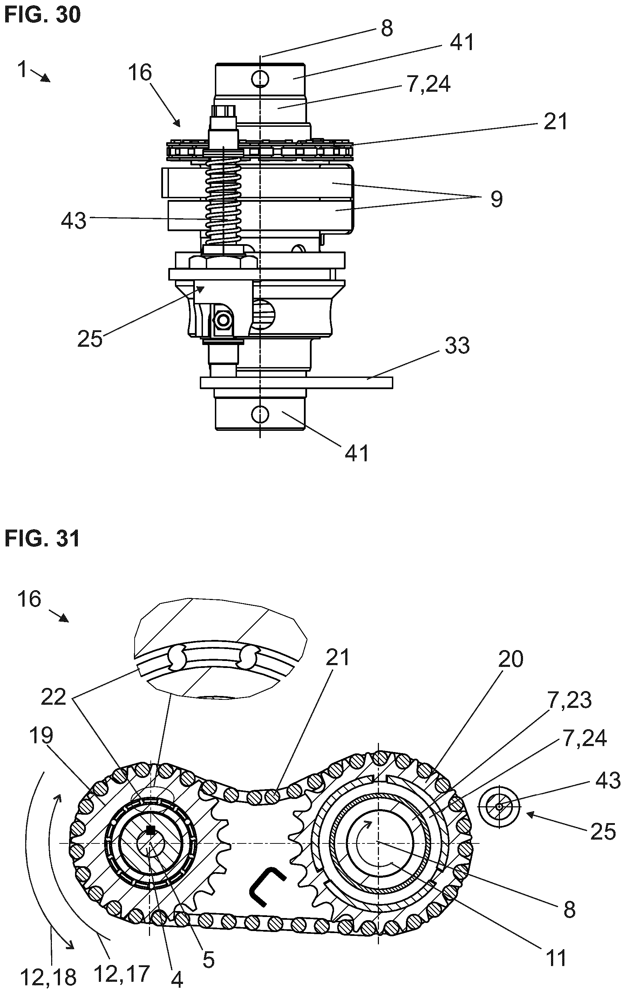

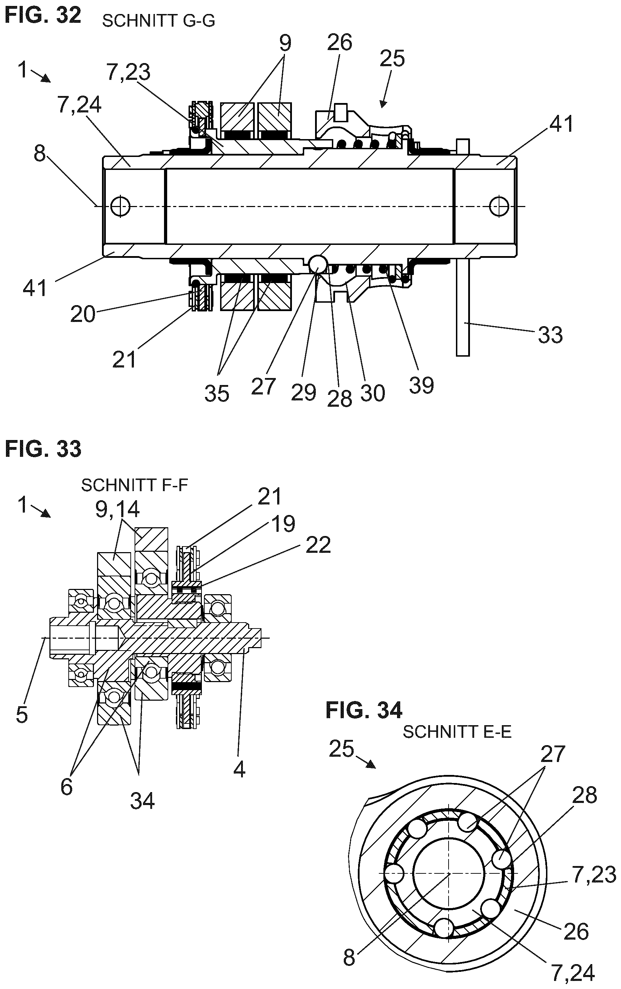

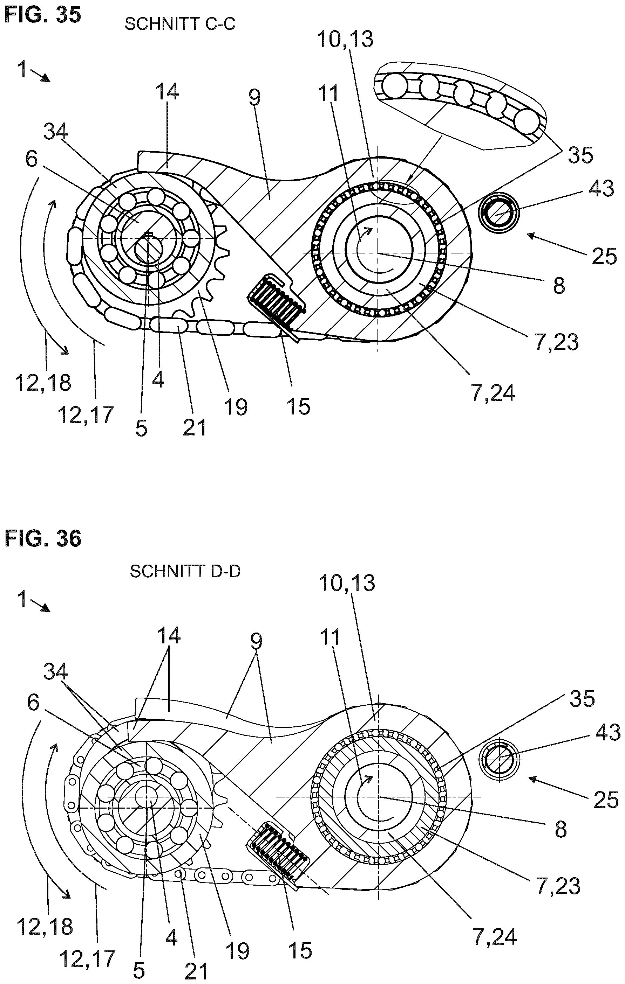

Die Fig. 25-36 zeigen ein drittes Ausführungsbeispiel einer erfindungsgemäßen Ladegutsicherung 1, wobei die Fig. 25 eine Explosionsdarstellung, die Fig. 26-30 Seitenansichten und die Fig. 31-36 diverse Schnitte durch die Ladegutsicherung 1 zeigen. Im Folgenden sei zunächst hauptsächlich auf die in der Fig. 25 gezeigte Explosionsdarstellung verwiesen, da hier alle Komponenten dargestellt sind.

Bei diesem dritten Ausführungsbeispiel weist die Ladegutsicherung 1 zumindest ein Getriebe 16 zur Übertragung der Bewegung der Antriebswelle 4 auf die Abtriebswelle 7 auf, wobei das Getriebe 16 dazu ausgebildet ist, die Abtriebswelle 7 schneller anzutreiben als die wenigstens eine Ratsche 9 die Abtriebswelle 7 antreibt.

Hier ist die Sammelwelle 23 insbesondere durch die wenigstens eine Ratsche 9 und durch das zumindest eine Getriebe 16 antreibbar, wobei die Ausgangswelle 24 mit der Wickelrolle 3 verbindbar ist.

Bei diesem Ausführungsbeispiel ist das zumindest eine Getriebe 16 dazu ausgebildet, dass es bei einer Rotation der Antriebswelle 4 in eine erste Antriebsrotationsrichtung 17 inaktiv ist und bei einer Rotation der Antriebswelle 4 in eine zweite Antriebsrotationsrichtung 18, welche der ersten Antriebsrotationsrichtung 17 entgegengesetzt ist, aktiv ist, wobei das zumindest eine Getriebe 16 die Abtriebswelle 7 in die Abtriebsrotationsrichtung 11 bewegt.

Bei diesem Ausführungsbeispiel ist das zumindest eine Getriebe 16 ein, vorzugsweise formschlüssiges, Zugmittelgetriebe, insbesondere offenes Kettengetriebe, welches ein mit der Antriebswelle 4 verbundenes Antriebsrad 19 und ein mit der Abtriebswelle 7 verbundenes Abtriebsrad 20 aufweist, wobei das Antriebsrad 19 und das Abtriebsrad 20 mit einem Zugmittel 21, insbesondere einer Kette, bewegungsgekoppelt sind.

Bei diesem Ausführungsbeispiel ist das Antriebsrad 19 mittels eines Antriebsradfreilaufs 22 mit der Antriebswelle 4 verbunden, wobei der Antriebsradfreilauf 22 das Antriebsrad 19 in jene Rotationsrichtung mitnimmt, über welche das Abtriebsrad 20 des zumindest einen Getriebes 16 die Abtriebswelle 7 in die Abtriebsrotationsrichtung 11 rotiert.

Besonders bevorzugt ist das Abtriebsrad 20 mit der Abtriebswelle 7, insbesondere der Sammelwelle 24, fest, vorzugsweise lösbar und/oder formschlüssig, verbunden.

Aus den Fig. 25-36 kann das Verfahren zum Spannen und/oder Aufwickeln des Zugmittels 2, z.B. des Gurts, mit einer erfindungsgemäßen Ladegutsicherung 1 abgeleitet werden, wobei das Verfahren folgende Schritte umfasst:
- Antreiben der Antriebswelle 4 zum Spannen des Zugmittels 3, insbesondere mit einem, vorzugsweise elektrischen, Rotationsantrieb 32, in eine erste Antriebsrotationsrichtung 17, und
- vorzugsweise Antreiben der Antriebswelle 4 zum Aufwickeln des Zugmittels 3 in eine der ersten Antriebsrotationsrichtung 17 entgegensetzte zweite Antriebsrotationsrichtung 18, wobei das zumindest eine Getriebe 16 die Abtriebswelle 7 antreibt.

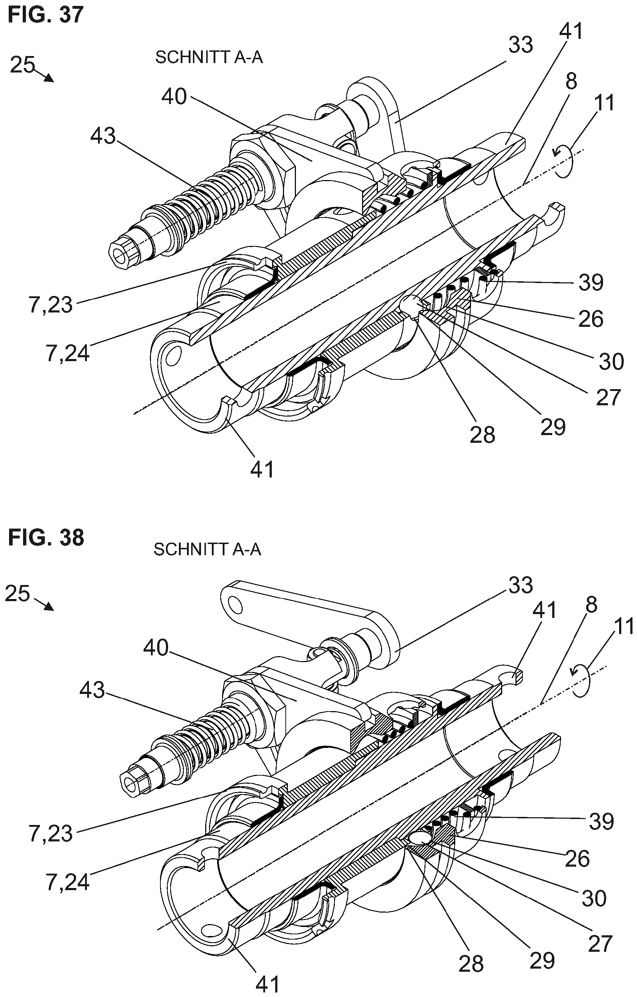

Die Fig. 37-44 zeigen Schnitte und Ansichten einer Kupplung 25 einer erfindungsgemäßen Ladegutsicherung 1. Die Fig. 37 und 39-41 zeigen die Kupplung 1 in einer gekuppelten Stellung, in welcher eine Bewegung der Abtriebswelle 7 entgegen die Abtriebsrotationsrichtung 11 gesperrt ist. Die Fig. 38 und 42-44 zeigen die Kupplung 1 in einer entkuppelten Stellung, in welcher die Bewegung der Abtriebswelle 7 entgegen die Abtriebsrotationsrichtung 11 freigegeben ist, sodass ein Abwickeln des Zugmittels 1 von der Wickelrolle 3 möglich ist.

In diesen Figuren ist gut gezeigt, dass der Kupplungsring 26 vorzugsweise einen ersten ringförmigen Bereich 29 mit einem ersten Innendurchmesser und einen zweiten ringförmigen Bereich 30 mit einem zweiten Innendurchmesser aufweist, wobei der zweite Innendurchmesser größer als der erste Innendurchmesser ist und wobei der zweite ringförmige Bereich 30 zur Aufnahme des wenigstens einen Sperrkörpers 27 ausgebildet ist.

Insbesondere blockiert der erste ringförmige Bereich 29 den wenigstens einen Sperrkörper 27 in der gekuppelten Stellung in eine radiale Richtung bezüglich der Abtriebsachse 7, wobei der wenigstens eine Sperrkörper 27 in die wenigstens eine Öffnung 28 in der Abtriebswelle 7, insbesondere der Ausgangswelle 24, eingreift.

Insbesondere nimmt der zweite ringförmige Bereich 30 den wenigstens einen Sperrkörper 27 in der entkuppelten Stellung auf, sodass der wenigstens eine Sperrkörper 27 an der Abtriebswelle 7, insbesondere an der Ausgangswelle 24, anliegt, sodass die Ausgangswelle 24 relativ zur Sammelwelle 23 bewegbar ist.

Bei diesem bevorzugten Ausführungsbeispiel sind mehrere Sperrkörper 27 in Form von Kugeln vorgesehen.

Bei diesem Ausführungsbeispiel umfasst die Kupplung 25 eine, vorzugsweise die Abtriebswelle 7 umgebende und/oder daran abgestützte, Rückstellfeder 39 auf, welche den Kupplungsring 26 in die gekuppelte Stellung vorspannt, insbesondere sodass die Kupplung 25 in einer Grundstellung, d.h. vor allem in einem Spann- und/oder Wickelzustand der Ladegutsicherung 1, immer gekuppelt ist.

Bei diesem Ausführungsbeispiel weist die Kupplung 25 einen Kupplungshebel 33 zur Betätigung der Kupplung 25, insbesondere zum Verschieben des Kupplungsrings 26 zwischen der gekuppelten Stellung und der entkuppelten Stellung auf.

Vorzugweise ist der Kupplungshebel 33 zum mechanischen Einrasten ausgebildet und/oder mittels einer Feder vorgespannt, vorzugsweise wobei der Kupplungshebel 33 in der Grundstellung eingerastet ist, sodass die Abtriebswelle 7 und die Sammelwelle 23 gekuppelt sind.

Insbesondere ist der Kupplungshebel 33 über ein Befestigungselement 40 und einer am Befestigungselement 40 angebrachten Kupplungshebelachse 43 mit dem Kupplungsring 26 verbunden.

In bevorzugten Ausführungsbeispielen ist der Kupplungshebel 26 lösbar mit dem Befestigungselement 40 und/oder der Kupplungshebelachse 43 verbunden, wobei er insbesondere zu beiden Seiten des Befestigungselements 40, insbesondere der Kupplungshebelachse 43, montierbar ist.

Aus den Fig. 37-44 kann das Verfahren zum Abwickeln des Zugmittels 3 mit einer erfindungsgemäßen Ladegutsicherung 1 abgeleitet werden, wobei das Verfahren folgende Schritte umfasst:
- optional Entkuppeln der Kupplung 25, vorzugsweis durch Betätigung des Kupplungshebels 33, sodass die Ausgangswelle 24 relativ zur Sammelwelle 23, insbesondere entgegen die Abtriebsrotationsrichtung 11, bewegbar ist, und
- insbesondere manuelles Drehen der Abtriebswelle 7, insbesondere der Ausgangswelle 24, entgegen die Abtriebsrotationsrichtung 11.

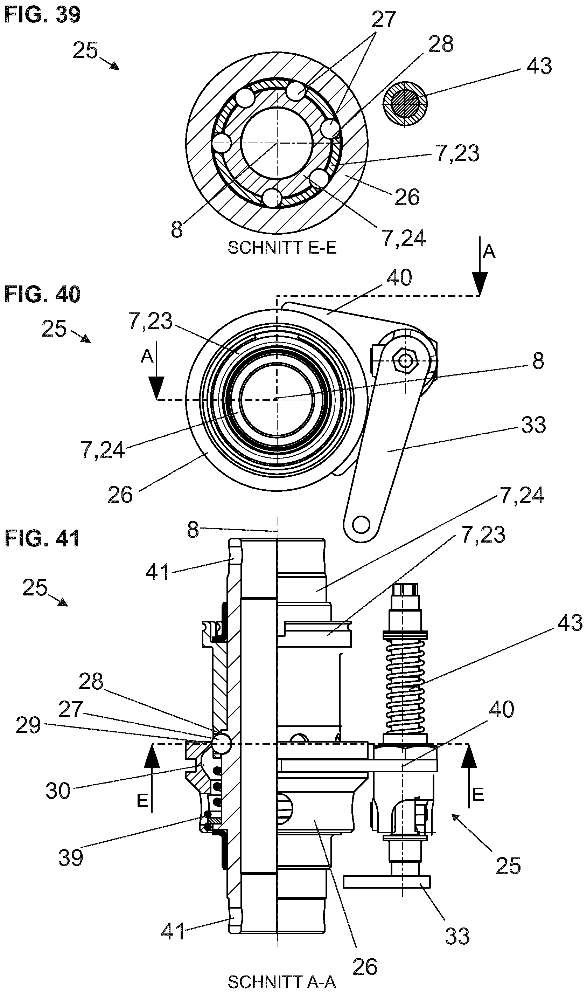

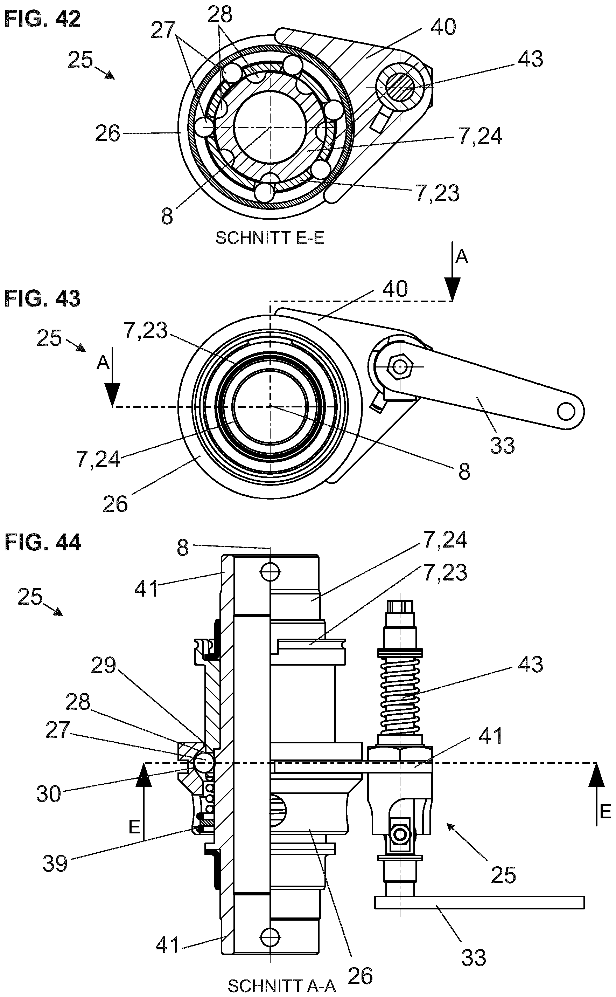

Die in den Fig. 39 und 42 gezeigten Schnitte E-E durch die Kupplung 25 zeigen besonders gut die Position des zumindest einen Sperrkörpers 27, insbesondere der Kugeln, in der gekuppelten Stellung (Fig. 39) und in der entkuppelten Stellung (Fig. 42).

Entsprechend dazu zeigen die Fig. 40 und 43 die Stellung des Kupplungshebels 33 in der gekuppelten Stellung (Fig. 40) und in der entkuppelten Stellung (Fig. 43).

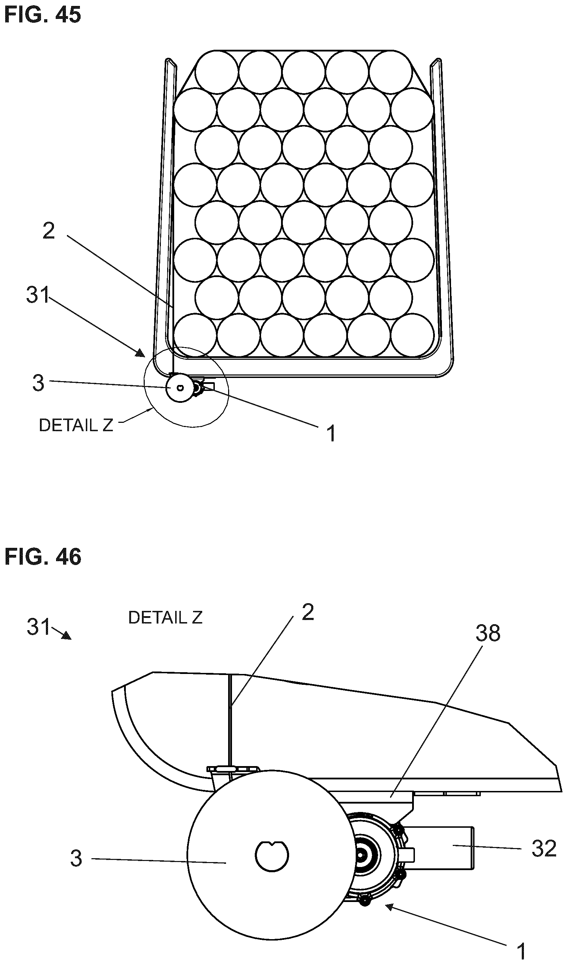

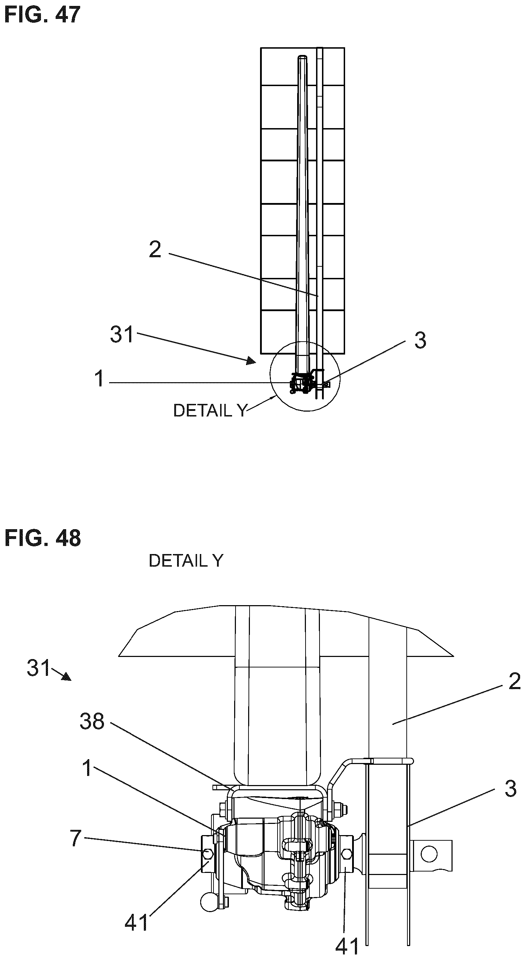

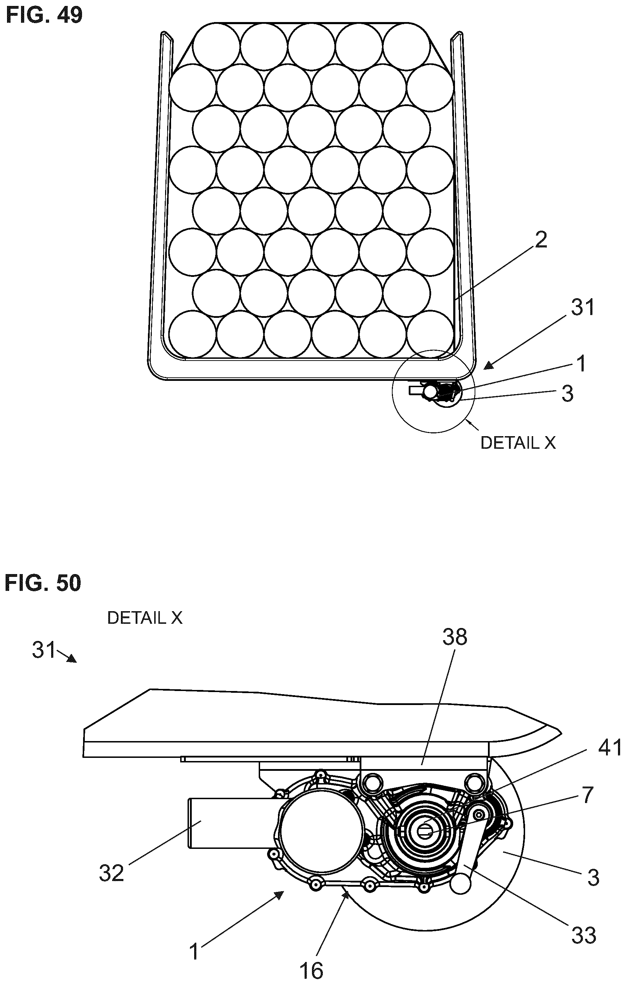

Die Fig. 45-52 zeigen das dritte Ausführungsbeispiel der erfindungsgemäßen Ladegutsicherung 1 als Teil der Spann- und/oder Wickelvorrichtung 31, wobei die Spann- und/oder Wickelvorrichtung 31 eine mit der Abtriebswelle 7, insbesondere der Ausgangswelle 24, bewegungsgekoppelte, insbesondere hohle, Wickelrolle 3 und vorzugsweise einen, insbesondere elektrischen, Rotationsantrieb 32 zum Antreiben der Antriebswelle 4 und/oder ein an der Wickelrolle 3 befestigtes Zugmittel 2 aufweist.

Die Fig. 45-51 zeigen die Spann- und/oder Wickelvorrichtung 31 in einer ersten Variante, in welcher die Wickelrolle 3 auf einer ersten Seite des Montagelements 38 und/oder der Ladegutsicherung 1 angeordnet ist, wobei der Kupplungshebel 33 auf der gegenüberliegenden, zweiten Seite angeordnet ist.

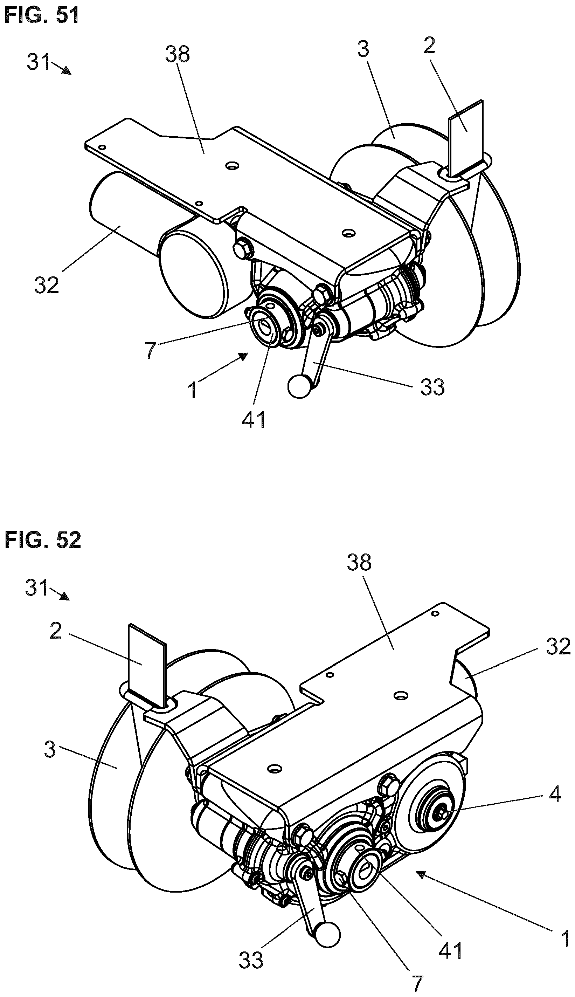

Die Fig. 52 zeigt die Spann- und/oder Wickelvorrichtung in einer zweiten Variante, in welcher die Wickelrolle 3 auf der zweiten Seite und der Kupplungshebel 33 auf der ersten Seite angeordnet ist.

Insbesondere die Fig. 51 und 52 zeigen gut, dass die Abtriebswelle 7 in bevorzugten Ausführungsbeispielen an ihren beiden Enden je einen Befestigungsbereich 41 aufweist, wobei die Wickelrolle 3 an beiden Befestigungsbereichen 41 befestigbar ist.

Weiters zeigen die Fig. 51 und 52 gut, dass der Kupplungshebel 33 vorzugsweise zu beiden Seiten des Befestigungselements 40 der Kupplung 25 montierbar ist.

Hier ist der Kupplungshebel 33 an einem Ende der Kupplungshebelachse 43 angebracht.

Der Kupplungshebel 33 kann alternativ auch als Kupplungsbügel ausgebildet sein und an beiden Enden der Kupplungshebelachse 43 montiert sein.

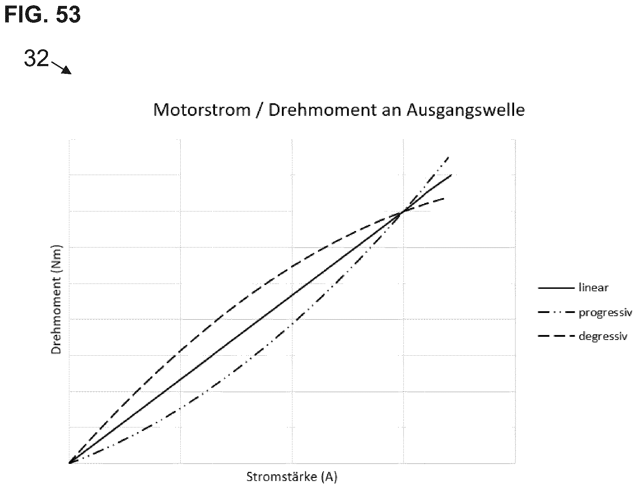

Die Fig. 53 zeigt Beispiele bevorzugter Kennlinien des Zusammenhangs zwischen einem Motorstrom, insbesondere der Stromstärke in [A], und einem Drehmoment an der Ausgangswelle, insbesondere in [Nm], des, insbesondere als Elektromotor ausgebildeten, Rotationsantriebs 32.

Dabei kann ein linearer oder progressiver oder degressiver Zusammenhang zwischen dem Motorstrom und dem Drehmoment an der Ausgangswelle vorgesehen sein.

Ein gewünschtes Drehmoment an der Ausgangswelle kann somit durch die Wahl der Motorstromstärke erzeugt werden, wobei durch die gewählte Kennlinie eine eindeutige Zuordnung zwischen der Motorstromstärke und dem Drehmoment gegeben ist.

Mittels dieses Zusammenhangs kann eine Überwachungseinheit den Spannungszustand des Zugmittels 2 überwachen.

### Bezugszeichenliste:

- 1: Ladegutsicherung
- 2: Zugmittel
- 3: Wickelrolle
- 4: Antriebswelle
- 5: Antriebsachse
- 6: Exzenter
- 7: Abtriebswelle
- 8: Abtriebsachse
- 9: Ratsche
- 10: Außenring
- 11: Abtriebsrotationsrichtung
- 12: Antriebsrotationsrichtung
- 13: Ratschenhebel
- 14: Fortsatz
- 15: Rückstellvorrichtung
- 16: Getriebe
- 17: erste Antriebsrotationsrichtung
- 18: zweite Antriebsrotationsrichtung
- 19: Antriebsrad
- 20: Abtriebsrad
- 21: Zugmittel
- 22: Antriebsradfreilauf
- 23: Sammelwelle
- 24: Ausgangswelle
- 25: Kupplung
- 26: Kupplungsring
- 27: Sperrkörper
- 28: Öffnung
- 29: erster ringförmige Bereich
- 30: zweiter ringförmiger Bereich
- 31: Spann- und/oder Wickelvorrichtung
- 32: Rotationsantrieb
- 33: Kupplungshebel
- 34: Exzenterlager
- 35: Ratschenfreilauf
- 36: Tragelement
- 37: Abtriebsfreilauf
- 38: Montageelement
- 39: Rückstellfeder
- 40: Befestigungselement
- 41: Befestigungsbereich
- 42: Flanschlager
- 43: Kupplungshebelachse

## Patentansprüche

1. Ladegutsicherung (1) zum Spannen und/oder Wickeln eines Zugmittels (2) auf einer Wickelrolle (3), wobei die Ladegutsicherung (1)
- eine Antriebswelle (4) mit einer Antriebsachse (5) und mit zumindest einem Exzenter (6) umfasst, wobei die Antriebswelle (4) rotatorisch antreibbar ist, und
- eine Abtriebswelle (7) mit einer von der Antriebsachse (5) verschiedenen und vorzugsweise zur Antriebsachse (5) parallelen Abtriebsachse (8) umfasst, wobei die Abtriebswelle (7) rotatorisch antreibbar und mit der Wickelrolle (3) zum Rotieren der Wickelrolle (3) direkt oder indirekt verbindbar ist, und
- wenigstens eine Ratsche (9) mit einem Außenring (10) umfasst, wobei die wenigstens eine Ratsche (9) mit der Abtriebswelle (7) zum Rotieren der Abtriebswelle (7) in eine Abtriebsrotationsrichtung (11) bewegungsgekoppelt ist,
**dadurch gekennzeichnet, dass** der Außenring (10) unabhängig von einer Antriebsrotationsrichtung (12) der Antriebswelle (4) durch den wenigstens einen Exzenter (6) rotierend um die Abtriebsachse (8) mitnehmbar ist.

2. Ladegutsicherung (1) nach Anspruch 1, wobei der Außenring (10) unabhängig von dem wenigstens einen Exzenter (6) in die Abtriebsrotationsrichtung (11) bewegbar ist und/oder wobei der Außenring (10) der Ratsche (9) ein Ratschenhebel (13) mit wenigstens einem Fortsatz (14) ist, wobei der wenigstens eine Fortsatz (14) durch den wenigstens einen Exzenter (6) mitnehmbar ist.

3. Ladegutsicherung (1) nach einem der vorhergehenden Ansprüche, wobei die Ladegutsicherung (1) wenigstens eine Rückstellvorrichtung (15), vorzugsweise umfassend eine Feder und/oder einen Rückholarm, aufweist, welche dazu ausgebildet ist oder sind, den Außenring (10), insbesondere den Ratschenhebel (13), entgegengesetzt zur Abtriebsrotationsrichtung (11) zu bewegen.

4. Ladegutsicherung (1) nach einem der vorhergehenden Ansprüche, wobei die Ladegutsicherung (1) zumindest zwei Ratschen (9) und die Antriebswelle (4) zumindest zwei, insbesondere um einen Drehwinkel relativ zur Antriebsachse (5) und entlang der Antriebsachse (5) zueinander versetzte, Exzenter (6) aufweist, wobei jeder Außenring (10) jeder Ratsche (9) durch je einen Exzenter (6) mitnehmbar ist.

5. Ladegutsicherung (1) nach einem der vorhergehenden Ansprüche, wobei die Ladegutsicherung (1) zumindest ein Getriebe (16) zur Übertragung der Bewegung der Antriebswelle (4) auf die Abtriebswelle (7) aufweist, wobei das Getriebe (16) dazu ausgebildet ist, die Abtriebswelle (7) schneller anzutreiben als die wenigstens eine Ratsche (9) die Abtriebswelle (7) antreibt.

6. Ladegutsicherung (1) nach Anspruch 5, wobei das zumindest eine Getriebe (16) dazu ausgebildet ist, dass es bei einer Rotation der Antriebswelle (4) in eine erste Antriebsrotationsrichtung (17) inaktiv ist und bei einer Rotation der Antriebswelle (4) in eine zweite Antriebsrotationsrichtung (18), welche der ersten Antriebsrotationsrichtung (17) entgegengesetzt ist, aktiv ist, wobei das zumindest eine Getriebe (16) die Abtriebswelle (7) in die Abtriebsrotationsrichtung (11) bewegt.

7. Ladegutsicherung (1) nach Anspruch 5 oder 6, wobei das zumindest eine Getriebe (16) ein, vorzugsweise formschlüssiges, Zugmittelgetriebe ist, welches ein mit der Antriebswelle (4) verbundenes Antriebsrad (19) und ein mit der Abtriebswelle (7) verbundenes Abtriebsrad (20) aufweist, wobei das Antriebsrad (19) und das Abtriebsrad (20) mit einem Zugmittel (21) bewegungsgekoppelt sind.

8. Ladegutsicherung (1) nach Anspruch 7, wobei das Zugmittelgetriebe ein Kettengetriebe mit einer Kette als Zugmittel (21) oder ein Riemengetriebe mit einem Riemen als Zugmittel (21) ist.

9. Ladegutsicherung (1) nach einem der Ansprüche 5 bis 8, wobei das Antriebsrad (19) mittels eines Antriebsradfreilaufs (22) mit der Antriebswelle (4) verbunden ist, wobei der Antriebsradfreilauf (22) das Antriebsrad (19) in jene Rotationsrichtung mitnimmt, über welche das Abtriebsrad (20) des zumindest einen Getriebes (16) die Abtriebswelle (7) in die Abtriebsrotationsrichtung (11) rotiert.

10. Ladegutsicherung (1) nach einem der vorhergehenden Ansprüche, wobei die Abtriebswelle (7) eine Sammelwelle (23) aufweist, welche durch die wenigstens eine Ratsche (9) und vorzugsweise durch das zumindest eine Getriebe (16) antreibbar ist.

11. Ladegutsicherung (1) nach einem der vorhergehenden Ansprüche, wobei die Abtriebswelle (7) eine entkuppelbare Ausgangswelle (24) umfasst, welche mit der Wickelrolle (3) verbindbar ist, vorzugsweise wobei die Ladegutsicherung (1) eine Kupplung (25) aufweiset, welche die Ausgangswelle (24) mit der Abtriebswelle (7), vorzugsweise mit der Sammelwelle (23), kuppelt und entkuppelt, vorzugsweise wobei die Ausgangswelle (24) zumindest bereichsweise innerhalb der Sammelwelle (23) angeordnet ist.

12. Ladegutsicherung (1) nach Anspruch 11, wobei die Kupplung (25) einen die Abtriebswelle (7) umgreifenden Kupplungsring (26) und wenigstens einen zwischen der Abtriebswelle (7) und dem Kupplungsring (26) angeordneten, verschieblich gelagerten Sperrkörper (27) aufweist, wobei der wenigstens eine Sperrkörper (27)
- in einer gekuppelten Stellung der Ausgangswelle (24), insbesondere mit der Sammelwelle (23), in wenigstens eine Öffnung (28) in der Abtriebswelle (7), insbesondere der Ausgangswelle (24) und/oder der Sammelwelle (23), eingreift und durch den Kupplungsring (26) in radiale Richtung zur Abtriebsachse (7) blockiert, und
- in einer entkuppelten Stellung der Ausgangswelle (24), insbesondere mit der Sammelwelle (23), eingriffsfrei an der Abtriebswelle (7) anliegt, sodass die Ausgangswelle (24) relativ zur Abtriebswelle (7), vorzugsweise zur Sammelwelle (23), verschiebbar ist.

13. Ladegutsicherung (1) nach Anspruch 12, wobei der Kupplungsring (26) einen ersten ringförmigen Bereich (29) mit einem ersten Innendurchmesser und einen zweiten ringförmigen Bereich (30) mit einem zweiten Innendurchmesser aufweist, wobei der zweite Innendurchmesser größer als der erste Innendurchmesser ist und wobei der zweite ringförmige Bereich (30) zur Aufnahme des wenigstens einen Sperrkörpers (27) ausgebildet ist, insbesondere
- wobei der erste ringförmige Bereich (29) den wenigstens einen Sperrkörper (27) in der gekuppelten Stellung in eine radiale Richtung bezüglich der Abtriebsachse (7) blockiert, wobei der wenigstens eine Sperrkörper (27) in die wenigstens eine Öffnung (28) in der Abtriebswelle (7) eingreift, und/oder
- wobei der zweite ringförmige Bereich (30) den wenigstens einen Sperrkörper (27) in der entkuppelten Stellung aufnimmt, sodass der wenigstens eine Sperrkörper (27) an der Abtriebswelle (7), insbesondere an der Ausgangswelle (24), anliegt.

14. Spann- und/oder Wickelvorrichtung (31) umfassend eine Ladegutsicherung (1) nach einem der vorhergehenden Ansprüche, und einen, insbesondere elektrischen, Rotationsantrieb (32) zum Antreiben der Antriebswelle (4) und vorzugsweise weiters umfassend
- eine mit der Abtriebswelle (7), insbesondere der Ausgangswelle (24), bewegungsgekoppelte, insbesondere hohle, Wickelrolle (3) und/oder
- ein an der Abtriebswelle (7), vorzugsweise an der Ausgangswelle (24) und/oder der Wickelrolle (3), befestigtes Zugmittel (2), und/oder
- eine Überwachungseinheit zur, vorzugweise zyklischen, Überwachung eines Spannungszustands des Zugmittels (2), vorzugsweise durch Überwachung zumindest eines Parameters des Rotationsantriebs (32).

15. Verfahren zum Spannen und/oder Aufwickeln eines Zugmittels (2), z.B. eines Gurts, mit einer Ladegutsicherung (1) nach einem der Ansprüche 1 bis 13 oder einer Spann- und/oder Wickelvorrichtung (31) nach Anspruch 14,
- wobei die Antriebswelle (4) zum Spannen des Zugmittels (3), insbesondere mit einem, vorzugsweise elektrischen, Rotationsantrieb (32), in eine erste Antriebsrotationsrichtung (17) angetrieben wird, und
- vorzugsweise wobei die Antriebswelle (4) zum Aufwickeln des Zugmittels (3) in eine der ersten Antriebsrotationsrichtung (17) entgegengesetzte zweite Antriebsrotationsrichtung (18) angetrieben wird, wobei das zumindest eine Getriebe (16) die Abtriebswelle (7) antreibt.
